# EUROPÄISCHE PATENTANMELDUNG

(11) **EP 2 314 418 A1**
(43) Veröffentlichungstag der Anmeldung: **27.04.2011**
(21) Anmeldenummer: 09173851.8
(22) Anmeldetag: 22.10.2009
(51) Int. Cl.: B25B 15/00, F16B 23/00

(54) **Schraube und Drehwerkzeug zum Drehen einer Schraube**

(71) Anmelder: Lidauer, Erwin, 4866 Unterach (AT)
(72) Erfinder: Lidauer, Erwin, 4866 Unterach (AT)
(74) Vertreter: Ellmeyer, Wolfgang

(57) **Zusammenfassung**

Die vorliegende Erfindung betrifft eine Schraube (1), aufweisend einen ersten, einen Schraubenschaft (2) bildenden Bereich und einen zweiten, einen Schraubenkopf (3) bildenden Bereich, wobei der Schraubenkopf (3) eine Werkzeugaufnahme zum Eingriff eines Drehwerkzeuges (20) aufweist, wobei die Werkzeugaufnahme wenigstens einen Werkzeugaufnahmeraum (4) aufweist, der durch eine dem Schraubenschaft (2) zugewandte erste Stirnseite (5), eine dem Schraubenschaft (2) abgewandte zweite Stirnseite (6) mit einer Einführöffnung (7) für das Drehwerkzeug (20) und eine die Stirnseiten (5, 6) verbindende Seitenwandung (8) begrenzt ist, und wobei in der Seitenwandung (8) des wenigstens einen Werkzeugaufnahmeraumes (4) zumindest bereichsweise wenigstens eine Ausnehmung (9) zum Eingriff des Drehwerkzeuges (20) vorgesehen ist. Die Erfindung betrifft ferner ein Drehwerkzeug (20) zum Drehen einer Schraube (1), aufweisend zumindest einen Drehwerkzeugschaft (22) und wenigstens einen an einem freien Ende des zumindest einen Drehwerkzeugschaftes (22) angrenzenden Drehwerkzeugkopf (21), der zum Eingriff in eine Werkzeugaufnahme der Schraube (1) ausgebildet ist, wobei der wenigstens eine Drehwerkzeugkopf (21) und der zumindest eine Drehwerkzeugschaft (22) zusammen eine Steckeinheit eines Bajonettverschlusses bilden.

## Beschreibung

Die vorliegende Erfindung betrifft eine Schraube, aufweisend einen ersten, einen Schraubenschaft bildenden Bereich und einen zweiten, einen Schraubenkopf bildenden Bereich, wobei der Schraubenkopf eine Werkzeugaufnahme zum Eingriff eines Drehwerkzeuges aufweist, und wobei die Werkzeugaufnahme wenigstens einen Werkzeugaufnahmeraum aufweist, der durch eine dem Schraubenschaft zugewandte erste Stirnseite, eine dem Schraubenschaft abgewandte zweite Stirnseite mit einer Einführöffnung für das Drehwerkzeug und eine die Stirnseiten verbindende Seitenwandung begrenzt ist. Ferner betrifft die vorliegende Erfindung ein Drehwerkzeug zum Drehen einer Schraube, aufweisend einen Drehwerkzeugschaft und einen an einem freien Ende des Drehwerkzeugschaftes angrenzenden Drehwerkzeugkopf, der zum Eingriff in eine Werkzeugaufnahme der Schraube ausgebildet ist.

Schrauben und entsprechende Drehwerkzeuge, wie beispielsweise Schraubendreher oder Schraub-Bits, zum Drehen von Schrauben sind vielfältig bekannt. Schrauben weisen in der Regel einen Schraubenschaft und einen Schraubenkopf auf. Der Schraubenschaft kann über seine gesamte Länge ein Gewinde aufweisen. Alternativ dazu kann der Schraubenschaft ein Teilgewinde aufweisen, das nur im Bereich der dem Schraubenkopf abgewandten Seite des Schraubenschaftes vorgesehen ist. An vielen Schraubenköpfen ist eine Werkzeugaufnahme zum Eingriff eines Drehwerkzeuges bzw. eines Drehwerkzeugkopfes eines Drehwerkzeuges ausgebildet. Die Werkzeugaufnahme kann auch als Schraubenantrieb bezeichnet werden. Die Werkzeugaufnahme kann beispielsweise durch einen Längsschlitz, einen Kreuzschlitz, durch einen Innensechskant oder einen Innenvielzahn gebildet sein. Diese Werkzeugaufnahmen zeichnen sich durch unterschiedliche übertragbare Drehmomente sowie durch unterschiedliche Zentrierbarkeiten des Drehwerkzeuges aus.

Ein Nachteil bei Schrauben mit derartigen Werkzeugaufnahmen ist, dass beim Schrauben, d.h. beim Ein- oder Ausschrauben der Schrauben, das Drehwerkzeug leicht aus der Werkzeugaufnahme heraus- oder abrutschen kann. Ein heraus- oder abrutschendes Drehwerkzeug kann, insbesondere wenn ein erhöhter Anpressdruck über das Drehwerkzeug auf die Schraube ausgeübt wird, starke Abnützungen an der Schraube und an dem Drehwerkzeug verursachen. Durch ein heraus- oder abrutschendes Drehwerkzeug besteht ferner eine erhöhte Gefahr von Verletzungen von Personen und Beschädigungen des Werkstückes. Beschädigte, insbesondere ausgeleierte Schraubenköpfe bieten keinem Drehwerkzeug mehr Halt, schlecht eingedrehte Schrauben lassen sich oft nicht mehr ausdrehen.

In der Patentliteratur findet man Beispiele von Schrauben und dazugehörigen Drehwerkzeugen, die neben den üblichen Senkausnehmungen im Schraubenkopf, wie beispielswiese einem Kreuzschlitz oder einem Innensechskant, zur Aufnahme des axial eingesetzten Drehwerkzeuges, das eine der Werkzeugaufnahme der Schraube komplementäre Kopfform aufweist, noch zusätzliche Ausnehmungen im zentralen Bereich aufweisen. Diese dienen dem Zweck, das als passendes Gegenstück konstruierte Drehwerkzeug in der Werkzeugaufnahme des Schraubenkopfes zu zentrieren und eine mehr oder weniger stabile Verbindung von Drehwerkzeug und Schraube herzustellen, indem ein seitliches Abrutschen verhindert wird.

Aus der DE 40 35 060 A1 ist beispielsweise ein Schraubendreher mit einem sogenannten Rutschstopp-Dorn bekannt. Die entsprechende Schraube weist als zusätzliche Ausnehmung ein Loch oder eine Vertiefung in der Mitte des Schraubenkopfes auf, d.h. an der dem Schraubenschaft zugewandten Stirnseite der Werkzeugaufnahme des Schraubenkopfes, um den Dorn an der Spitze des Drehwerkzeugkopfes aufzunehmen. Eine ähnliche Zentrierung des Drehwerkzeuges an dem Schraubenkopf ist auch aus der DE 198 06 662 C1 bekannt. Dort ist an der Spitze des Drehwerkzeugkopfes des Drehwerkzeugs ein Rastelement in Form einer ¾ Kugel vorgesehen, das in eine komplementäre kugelförmige Ausnehmung am Boden der Werkzeugaufnahme im Schraubenkopf eingesteckt wird, so dass das Drehwerkzeug beim Ansetzen in der kugelförmigen Ausnehmung verrastet und so an bzw. in dem Schraubenkopf zentriert wird. Sowohl das Loch bzw. die Vertiefung in der Mitte des Schraubenkopfes, als auch die kugelförmige Ausnehmung an dem Boden der Werkzeugaufnahme sind koaxial zu der Längsachse der Schraube angeordnet.

Die Ausbildung der Schraubenköpfe und der Drehwerkzeuge nach diesen beiden Beispielen verhindert das Abrutschen des Drehwerkzeuges vom Schraubenkopf bzw. das Herausrutschen des Drehwerkzeuges aus der Werkzeugaufnahme des Schraubenkopfes jedoch nur bis zu einem gewissen Grad. Bei Schraubarbeiten mit höheren Drehmomenten oder in schwierigen Fällen ist aber ein hoher Anpressdruck des Drehwerkzeuges notwendig, um dieses am Abrutschen vom Schraubenkopf bzw. am Herausrutschen aus der Werkzeugaufnahme des Schraubenkopfes hindern zu können.

Aus der DE 39 21 874 A1 ist des Weiteren eine Schraube mit einer Senkausnehmung im Schraubenkopf bekannt, an deren Innenwand sich ein Rechts- und ein Linksgewinde befinden. Zwar wird durch das Einschrauben des Drehwerkzeuges in den Schraubenkopf bzw. in die entsprechende Werkzeugaufnahme am Schraubenkopf eine stabile axiale Verbindung zwischen dem Drehwerkzeug und der Schraube erreicht, allerdings bedeutet dies in der Praxis einen erheblichen Mehraufwand bei jedem Schraubvorgang, da drei Schraubvorgänge pro ein- oder auszudrehender Schraube durchzuführen sind.

Aufgabe der Erfindung ist es eine Schraube und ein Drehwerkzeug zu schaffen, die ein besonders einfaches und sicheres Drehen der Schraube durch das Drehwerkzeug ermöglichen. Insbesondere soll ein Ab- bzw. Herausrutschen des Drehwerkzeuges während der Drehung der Schraube von dem bzw. aus dem Schraubenkopf der Schraube verhindert werden.

Diese Aufgaben werden erfindungsgemäß durch eine Schraube mit den Merkmalen gemäß dem unabhängigen Patentanspruch 1 sowie durch ein Drehwerkzeug mit den Merkmalen gemäß dem unabhängigen Patentanspruch 12 gelöst. Weitere Merkmale und Details der Erfindung ergeben sich aus den Unteransprüchen, der Beschreibung sowie den Zeichnungen. Dabei gelten Merkmale und Details, die im Zusammenhang mit der erfindungsgemäßen Schraube beschrieben sind, selbstverständlich auch im Zusammenhang mit dem erfindungsgemäßen Drehwerkzeug, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch eine Schraube, aufweisend einen ersten, einen Schraubenschaft bildenden Bereich und einen zweiten, einen Schraubenkopf bildenden Bereich, wobei der Schraubenkopf eine Werkzeugaufnahme zum Eingriff eines Drehwerkzeuges aufweist, wobei die Werkzeugaufnahme wenigstens einen Werkzeugaufnahmeraum aufweist, der durch eine dem Schraubenschaft zugewandte erste Stirnseite, eine dem Schraubenschaft abgewandte zweite Stirnseite mit einer Einführöffnung für das Drehwerkzeug und eine die Stirnseiten verbindende Seitenwandung begrenzt ist, und wobei in der Seitenwandung des wenigstens einen Werkzeugaufnahmeraumes zumindest bereichsweise wenigstens eine Ausnehmung zum Eingriff des Drehwerkzeuges vorgesehen ist, gelöst. Die Werkzeugaufnahme kann entweder einteilig gestaltet, das heißt mit einem Werkzeugaufnahmeraum, und im zentralen Bereich des Schraubenkopfes positioniert sein, oder aber auch mehrteilig, das heißt mit mehreren Werkzeugaufnahmeräumen, ausgebildet sein und im peripheren Bereich des Schraubenkopfes vorgesehen sein. D.h., eine mehrteilige Werkzeugaufnahme kann zwei oder mehr nicht miteinander verbundene Werkzeugaufnahmeräume aufweisen, die vorzugsweise dieselbe räumliche Ausdehnung und denselben Abstand von der Längsachse der Schraube aufweisen und auch vorzugsweise in einer gemeinsamen Ebene, die normal zur Längsachse der Schraube verläuft, liegen. Jeder Werkzeugaufnahmeraum ist vorteilhafterweise gleich aufgebaut. Die Werkzeugaufnahmeräume bilden zusammen die Werkzeugaufnahme der Schraube.

Der als Schraubenschaft ausgebildete erste Bereich der Schraube kann über seine gesamte Schaftlänge ein Außengewinde aufweisen. Alternativ dazu kann nur ein Bereich des Schraubenschaftes ein Außengewinde aufweisen. Dabei ist das Außengewinde vorteilhafterweise an dem freien Ende des Schraubenschaftes vorgesehen, das dem Schraubenkopf der Schraube abgewandt ist. Den zweiten Bereich der Schraube bildet der Schraubenkopf. Dabei kann der Schraubenkopf eine Verlängerung des Schraubenschaftes darstellen. D.h., in diesem Fall weisen der Schraubenkopf und der Schraubenschaft einen identischen Querschnitt auf. Der Schraubenkopf kann in diesem Sonderfall ebenfalls ein Außengewinde aufweisen. In der Regel weist der Schraubenkopf jedoch einen größeren Querschnitt als der Schraubenschaft auf, so dass der Schraubenkopf als Anschlag für ein Werkstück dienen kann.

Der Schraubenkopf weist eine Werkzeugaufnahme zum Eingriff eines Drehwerkzeuges auf. Die Werkzeugaufnahme ist derart ausgebildet, dass nach dem Eingriff des Drehwerkzeuges, insbesondere des Drehwerkzeugkopfes des Drehwerkzeuges, in die Werkzeugaufnahme, die Schraube durch eine Drehung des Drehwerkzeuges gedreht werden kann. Die Werkzeugaufnahme weist wenigstens einen Werkzeugaufnahmeraum auf, der durch eine dem Schraubenschaft zugewandte erste Stirnseite, eine dem Schraubenschaft abgewandte zweite Stirnseite mit einer ein- oder mehrteiligen Einführöffnung für das Drehwerkzeug und eine die Stirnseiten verbindende Seitenwandung begrenzt ist. Dabei kann der Werkzeugaufnahmeraum verschiedenartige Geometrieformen aufweisen. Durch die zumindest eine Einführöffnung an der zweiten Stirnseite des Werkzeugaufnahmeraumes kann der Kopf eines Drehwerkzeuges in den Werkzeugaufnahmeraum eingeführt werden. Der Werkzeugaufnahmeraum kann beispielsweise eine hohlzylinderförmige und durch Hohlprismen erweiterte Grundform aufweisen, kann beispielsweise aber auch aus zwei oder mehr negativen Rohrabschnittsformen bestehen. Ferner kann die Querschnittfläche des Werkzeugaufnahmeraumes von der zweiten Stirnseite, d.h. von der Einführöffnung, zur ersten Stirnseite hin abnehmen. In diesem Fall weist der Werkzeugaufnahmeraum vorzugsweise einen zur ersten Stirnseite hin konisch verjüngenden Verlauf auf. Andere, unsymmetrische Geometrien sind ebenfalls denkbar.

In der Seitenwandung des Werkzeugaufnahmeraumes ist zumindest bereichsweise wenigstens eine Ausnehmung zum Eingriff des Drehwerkzeuges vorgesehen. Die Ausnehmung kann eine Nut, eine Vertiefung oder eine Aussparung sein. Die Ausnehmung, in Form einer Vertiefung, Nut oder Aussparung, kann beispielsweise einen rechteckigen, einen dreieckigförmigen, runden oder gewölbten Querschnitt aufweisen. Insbesondere ist die wenigstens eine Ausnehmung als eine Hinterschneidung ausgebildet.

Ausnehmung in der Seitenwandung des Werkzeugaufnahmeraumes bedeutet im Sinne der Erfindung, dass unabhängig von der Art und Form des Werkzeugaufnahmeraumes bzw. der Seitenwandung des Werkzeugaufnahmeraumes, die Größe des Werkzeugaufnahmeraumes in dem Bereich der Ausnehmung um die Größe der Ausnehmung vergrößert wird. Dabei ist die Ausnehmung so in der Seitenwandung des Werkzeugaufnahmeraumes angeordnet, dass der Drehwerkzeugkopf während des axialen Einführens nicht in die Ausnehmung eingreifen kann. Erst wenn der Drehwerkzeugkopf des Drehwerkzeuges vollständig in den Werkzeugaufnahmeraum eingeführt worden ist, kann durch eine durch die Größe der Ausnehmung bestimmte Drehbewegung des Drehwerkzeuges ein Teil des Drehwerkzeugkopfes in die Ausnehmung in der Seitenwandung des Werkzeugaufnahmeraumes eingreifen. D.h., erst durch eine Drehung des Drehwerkzeuges um seine Längsachse, die im Eingriffszustand bzw. Einsetzzustand des Drehwerkzeuges in den Werkzeugaufnahmeraum der Werkzeugaufnahme des Schraubenkopfes der Schraube idealerweise koaxial zur Längsachse der Schraube verläuft, kann zumindest ein bestimmter Teil des Drehwerkzeugkopfes, insbesondere ein Vorsprung an dem Drehwerkzeugkopf, in die Ausnehmung bzw. die Hinterschneidung eingreifen.

Eine derartige Schraube kann einfach und sicher durch ein entsprechendes Drehwerkzeug gedreht, d.h. in ein Werkstück eingeschraubt bzw. ein- und ausgeschraubt, werden. Dabei kann das Drehwerkzeug bzw. der Drehwerkzeugkopf nach dem vollständigen Einführen des Drehwerkzeugkopfes in den Werkzeugaufnahmeraum des Schraubenkopfes und einer anschließenden bestimmten Drehung des Drehwerkzeuges um seine Längsachse in die zumindest eine Ausnehmung eingreifen bzw. die als Hinterschneidung ausgebildete zumindest eine Ausnehmung hintergreifen. Hierdurch kann das Drehwerkzeug weder von dem Schraubenkopf abrutschen, noch aus dem Werkzeugaufnahmeraum herausrutschen.

Nach dem Eingreifen des Drehwerkzeuges in die zumindest eine Ausnehmung bzw. dem Hintergreifen der zumindest einen Hinterschneidung durch das Drehwerkzeug ist dieses axial in dem Werkzeugaufnahmeraum der Werkzeugaufnahme des Schraubenkopfes gehalten. D.h., während des Eingriffs des Drehwerkzeuges in die zumindest eine Ausnehmung bzw. in die zumindest eine Hinterschneidung ist das Drehwerkzeug axial gesichert, d.h. es kann axial nicht bewegt werden und somit nicht aus dem Schraubenkopf der Schraube entfernt werden.

Bevorzugt sind wenigstens zwei sich in nicht diametral gegenüberliegender Position befindliche, besser aber mindestens vier, paarweise diametral gegenüberliegende Nute, Vertiefungen oder Aussparungen in der Seitenwandung des Werkzeugaufnahmeraumes als Ausnehmungen vorgesehen. Dies ermöglicht, dass die Schraube nach dem Eingriff des Drehwerkzeuges in die Werkzeugaufnahme sowohl aus einen Werkstück herausgedreht, als auch in ein Werkstück eingedreht werden kann, ohne dass dabei das Drehwerkzeug aus der Werkzeugaufnahme der Schraube herausrutschen kann. Dies ist lediglich von der Neigung bzw. Orientierung des Außengewindes der Schraube und der Drehrichtung des Drehwerkzeuges abhängig. Je nachdem in welche Richtung das Drehwerkzeug gedreht wird, kann die Schraube ein- oder ausgedreht werden.

Im Eingriffszustand des Drehwerkzeuges in die Ausnehmung(en) in der Seitenwandung des Werkzeugaufnahmeraumes des Schraubenkopfes überträgt das Drehwerkzeug während des Drehens des Drehwerkzeuges ein Drehmoment auf die Schraube, durch das diese gedreht wird. Dabei stellt das Drehwerkzeug eine das Drehmoment übertragende kraftschlüssige, axial fixierte Verbindung mit dem Schraubenkopf her. Diese Verbindung kann durch eine bestimmte, entgegengesetzte Drehung des Drehwerkzeuges leicht und schnell wieder gelöst werden.

Das Drehwerkzeug kann vorteilhafterweise nach dem vollständigen Einsetzen in den Werkzeugaufnahmeraum des Schraubenkopfes begrenzt in beide Drehrichtungen gedreht werden, bevor es durch seine Form eine kraftschlüssige, axial unbewegliche Verbindung mit dem Schraubenkopf herstellt und bei weiterer Drehung ein Drehmoment auf die Schraube überträgt.

Die wenigstens eine Ausnehmung bzw. Hinterschneidung weist vorteilhafterweise die negative Gestalt eines Teils des Drehwerkzeugkopfes auf, so dass der entsprechende Teil des Drehwerkzeugkopfes bei einer Drehung um seine Längsachse formschlüssig in die Ausnehmung eingreifen kann. Besonders bevorzugt weist eine solche Ausnehmung die Gestalt eines Segmentes bzw. eines Sektors einer kreisförmigen oder ovalen Scheibe auf, ähnlich eines Kuchenstückes. Dabei verlaufen die Ober- und Unterseiten des Segmentes bzw. Sektors vorteilhafterweise senkrecht zu der Längsachse der Schraube. Dadurch liegen die Kraftangriffsflächen dieses Segmentes bzw. Sektors, die zumindest einen Teil des Drehmomentes übertragen, in radialer oder in ungefähr radialer Richtung.

Besonders bevorzugt ist eine Schraube, bei der die wenigstens eine Ausnehmung bzw. die wenigstens eine Hinterschneidung als eine Vertiefung, Nut oder Aussparung ausgebildet ist, die parallel zu einer Ebene angeordnet ist, die senkrecht zu der Längsachse der Schraube verläuft. D.h., die Längsachse der Vertiefung, der Nut oder der Aussparung verläuft parallel zu einer gedachten Ebene, die orthogonal zu der Längsachse der Schraube verläuft. Die Ausnehmung, d.h. die Vertiefung, die Nut oder die Aussparung, dient als Führung für Teile des Drehwerkzeugkopfes, insbesondere für einen zum Eingriff vorgesehenen Vorsprung des Drehwerkzeugkopfes. Diese spezielle Anordnung der Ausnehmung ermöglicht, dass der vollständig in den Werkzeugaufnahmeraum eingeführte Drehwerkzeugkopf in die wenigstens eine Ausnehmung bzw. die als Hinterschneidung ausgebildete Ausnehmung eingeführt werden kann, ohne dass eine axiale Verschiebung des Drehwerkzeuges erfolgen kann. Eine derartige Anordnung der wenigstens einen Ausnehmung, insbesondere der Nut oder Aussparung, in der Seitenwandung des Werkzeugaufnahmeraumes ermöglicht nach dem Eingriff des Drehwerkzeugkopfes in die Ausnehmung, dass das Drehmoment von dem Drehwerkzeug sehr gut auf die Schraube übertragen werden kann, ohne dass ein axialer Anpressdruck oder eine axiale Zugkraft auf die Schraube ausgeübt werden muss.

Die wenigstens eine Ausnehmung, Nut oder Quervertiefung in der Seitenwandung des Werkzeugaufnahmeraumes weist vorteilhafterweise einen in die Tiefe hin abnehmenden Querschnitt auf, entsprechend dazu ist der zum Eingriff bestimmte komplementäre Teil des Drehwerkzeugkopfes nach außen hin konisch verjüngt oder abgerundet gestaltet. Dadurch wird das Drehwerkzeug nach dem Einsetzen in den Werkzeugaufnahmeraum des Schraubenkopfes auch dann in die korrekte Eingriffsposition geführt, wenn das Drehwerkzeug in nicht genau axialer Richtung, also leicht schief, in die Schraube eingesetzt wird. Diese Formgebung gewährleistet einen sicheren und schnellen Eingriff des Drehwerkzeuges insbesondere bei einem verschmutzten Werkzeugaufnahmeraum, verhindert außerdem ein Verkanten des Drehwerkzeuges in der Schraube und vermeidet starke Abnützungen und Beschädigungen von Schraube und Drehwerkzeugkopf.

Gemäß einer weiteren zweckmäßigen Weiterentwicklung der Erfindung kann bei der Schraube vorgesehen sein, dass der Werkzeugaufnahmeraum eine erste Geometrie aufweist und die Einführöffnung eine zweite Geometrie aufweist, wobei die zweite Geometrie der Einführöffnung kleiner als die erste Geometrie des Werkzeugaufnahmeraumes ausgebildet ist. Die Einführöffnung ist vorzugsweise derart ausgebildet, dass der Drehwerkzeugkopf des Drehwerkzeuges in axialer Richtung zu der Längsachse der Schraube leicht oder passgenau durch die Einführöffnung in den Werkzeugaufnahmeraum eingeführt werden kann. D.h., die Einführöffnung weist eine dem größten Querschnitt des Drehwerkzeugkopfes ähnliche oder affine, aber geringfügig größere Form auf. Der zum Vergleich zur Einführöffnung in Richtung des ersten Bereiches der Schraube näher liegende Werkzeugaufnahmeraum weist hingegen eine größere Geometrie auf als die Geometrie der Einführöffnung. Hierdurch ist es möglich, dass ein vollständig in den Werkzeugaufnahmeraum eingeführter Drehwerkzeugkopf in dem Werkzeugaufnahmeraum begrenzt radial gedreht werden kann, wobei der Drehwerkzeugschaft in der Einführöffnung drehbar gelagert ist. D.h., die Einführöffnung ermöglicht eine drehbare Lagerung des vollständig in den Werkzeugaufnahmeraum eingesteckten Drehwerkzeuges. Eine radiale Verschiebung des Drehwerkzeuges wird durch die Lagerung des Drehwerkzeugschaftes in der Einführöffnung verhindert. Die Einführöffnung weist vorzugsweise zumindest zwei kreissegmentförmig ausgebildete Teilbereiche auf, an denen der kreisrund ausgebildete Schaft drehbar anliegt.

Größere Geometrie bedeutet hierbei, dass der Werkzeugaufnahmeraum, in dem die wenigstens eine Ausnehmung vorgesehen ist, eine größere räumliche radiale Erstreckung bzw. einen größeren Querschnitt aufweist als die Einführöffnung.

Bevorzugt ist eine Schraube, bei der zwei, besser vier, Ausnehmungen in der Seitenwandung des Werkzeugaufnahmeraumes der Werkzeugaufnahme des Schraubenkopfes vorgesehen sind. Die Ausnehmungen sind vorteilhafterweise an zwei sich gegenüberliegenden Seitenwandungen in dem Werkzeugaufnahmeraum angeordnet. Hierdurch kann der vollständig in den Werkzeugaufnahmeraum eingesteckte Drehwerkzeugkopf begrenzt in beide Richtungen, d.h. mit und gegen den Uhrzeigersinn, verdreht werden, bis Teilbereiche des Drehwerkzeugkopfes formschlüssig in die entsprechenden Ausnehmungen eingreifen, um so eine kraftschlüssige, axial fixierte Verbindung mit der Schraube herzustellen und bei weiterer Drehung des Drehwerkzeuges ein Drehmoment auf die Schraube zu übertragen.

Eine derartig ausgebildete Schraube ermöglicht ein einfaches und sicheres Drehen der Schraube durch das Drehwerkzeug. Insbesondere kann ein Ab- bzw. Herausrutschen des Drehwerkzeuges während der Drehung der Schraube von bzw. aus dem Schraubenkopf der Schraube wirksam verhindert werden.

Besonders vorteilhaft ist es, wenn in der Seitenwandung des Werkzeugaufnahmeraumes mindestens vier Ausnehmungen, insbesondere vier paarweise um 180° versetzt zueinander liegende Ausnehmungen bzw. vier als Hinterschneidungen ausgebildete Ausnehmungen, vorgesehen sind. Die mindestens vier Ausnehmungen, die dem axial durch die Einführöffnung in der zweiten Stirnfläche des Werkzeugaufnahmeraumes des Schraubenkopfes eingesetzten Drehwerkzeug eine begrenzte und beidseitige Verdrehung im Schraubenkopf, d.h. in dem Werkzeugaufnahmeraum des Schraubenkopfes, ermöglichen, stellen vorteilhafterweise sogenannte Quervertiefungen dar und weisen vorteilhafterweise eine jeweils komplementäre Form zu mindestens vier Bereichen des Drehwerkzeugkopfes bzw. zu an mindestens vier Kraftangriffsflächen des Drehwerkzeugkopfes angebrachten Vorsprüngen auf.

Gemäß einer weiteren besonders zweckmäßigen Weiterbildung der Erfindung kann bei der Schraube vorgesehen sein, dass der Schraubenkopf an seinem stirnseitigen, dem ersten Bereich der Schraube abgewandten, freien Ende eine erste Schichtebene und eine zu dem ersten Bereich der Schraube näher liegende, an der ersten Schichtebene angrenzende, zweite Schichtebene aufweist, wobei die beiden Schichtebenen senkrecht zu der Längsachse der Schraube angeordnet sind, und dass die erste Schichtebene einen ersten Teil des Werkzeugaufnahmeraumes, der zur vollständigen Hindurchführung eines Drehwerkzeugkopfes des Drehwerkzeuges ausgebildet ist, aufweist und die zweite Schichtebene einen fluchtend zu dem ersten Teil des Werkzeugaufnahmeraumes angeordneten zweiten Teil des Werkzeugaufnahmeraumes aufweist, wobei der zweite Teil des Werkzeugaufnahmeraumes die zumindest eine als Hinterschneidung des ersten Werkzeugaufnahmeraumes ausgebildete Ausnehmung aufweist.

Bei dieser vorteilhaften Ausführungsform der Schraube entspricht der Querschnitt des ersten Teiles des Werkzeugaufnahmeraumes der ersten Schichtebene vorteilhafterweise der Einführöffnung an der zweiten Stirnseite des Werkzeugaufnahmeraumes des Schraubenkopfes. D.h., die erste Schichtebene umfasst die Einführöffnung, die zweite Schichtebene umfasst den zweiten Teil des Werkzeugaufnahmeraumes, in dem die zumindest eine als Hinterschneidung ausgebildete Ausnehmung vorgesehen ist. Der erste Teil des Werkzeugaufnahmeraumes dient nach der Hindurchführung des Drehwerkzeugkopfes zur drehbaren Lagerung und zur radialen Fixierung des Drehwerkzeugschaftes des Drehwerkzeuges. Der zweite Teil des Werkzeugaufnahmeraumes dient zur Aufnahme des vollständig in die Werkzeugaufnahme eingesteckten Drehwerkzeugkopfes. Die erste und zweite Schichtebene sind direkt aneinander angeordnet, wobei der zweite Teil des Werkzeugaufnahmeraumes fluchtend zu dem ersten Teil des Werkzeugaufnahmeraumes angeordnet ist, jedoch zumindest durch die wenigstens eine Ausnehmung eine etwas größere Geometrie bzw. Querschnittfläche als der erste Teil des Werkzeugaufnahmeraumes aufweist. Nach der passgenauen Hindurchführung des Drehwerkzeugkopfes des Drehwerkzeuges durch den als Einführöffnung fungierenden ersten Teil des Werkzeugaufnahmeraumes in der ersten Schichtebene wird der Drehwerkzeugschaft vorteilhafterweise durch kreisrund bzw. kreiszylindermantelausschnittförmig ausgebildete Bereiche der Seitenwandung des ersten Werkzeugaufnahmeraumes drehbeweglich gelagert. Der zweite Teil des Werkzeugaufnahmeraumes weist vorteilhafterweise eine nur unwesentlich größere Höhe, d.h. axiale Erstreckung, auf, als die Höhe, d.h. die axiale Erstreckung, des Drehwerkzeugkopfes. Hierdurch ist gewährleistet, dass der zweite Teil des Werkzeugaufnahmeraumes in der zweiten Schichtebene den Drehwerkzeugkopf formschlüssig aufnehmen kann. Nach einer Drehung des Drehwerkzeuges und damit des Drehwerkzeugkopfes hintergreift zumindest ein Bereich des Drehwerkzeugkopfes, insbesondere ein Vorsprung an dem Drehwerkzeugkopf, die wenigstens eine Ausnehmung und fixiert dadurch das Drehwerkzeug in axialer Richtung in dem Schraubenkopf. Ein Herausrutschen aus dem Schraubenkopf ist nach dem Eingreifen in die als Hinterschneidung ausgebildete Ausnehmung nicht möglich. Erst durch ein entsprechendes Zurückdrehen des Drehwerkzeugkopfes kann dieser wieder aus dem zweiten Teil des Werkzeugaufnahmeraumes und damit auch aus dem ersten Teil des Werkzeugaufnahmeraumes entfernt werden.

Bevorzugt sind die erste Schichtebene und die zweite Schichtebene scheibenförmig ausgebildet. Beispielsweise können die erste und die zweite Schichtebene jeweils ein Drittel bzw. ungefähr ein Drittel des Schraubenkopfes der Schraube darstellen. Es ist aber auch denkbar, dass die zweite Schichtebene direkt an den Schraubenschaft der Schraube, d.h. den ersten Bereich der Schraube, angrenzt. Generell können die Schichtebenen unterschiedliche Höhen aufweisen. Ein wesentlicher Vorteil dieser zweckmäßigen Weiterbildung besteht darin, dass dabei die Gesamtfläche zur Übertragung des Drehmomentes je nach der Höhe der Schichtebenen gezielt vergrößert werden kann, da beide Schichten in der Seitenwandung Kraftangriffsflächen aufweisen können. D. h., die Kraftangriffsflächen müssen nicht nur auf die Wandungen der Ausnehmungen im zweiten Schichtbereich beschränkt sein, sondern können auch zum Teil in der restlichen Seitenwandungsfläche des zweiten und auch ersten Schichtbereiches liegen.

Gemäß einer weiteren zweckmäßigen Ausführungsform der Schraube weist die stirnseitige Einführöffnung für das entsprechend gestaltete Drehwerkzeug zwei oder mehr in der Peripherie des Schraubenkopfes vorgesehenen Öffnungen auf, die jeweils die dem Schraubenschaft abgewandte Stirnseite der entsprechenden Teile des Werkzeugaufnahmeraumes darstellen, welcher noch durch eine jeweils zweite oder weitere, dem Schraubenschaft zugewandte Stirnseite und jeweils einer mit mindestens einer Ausnehmung in Richtung einer oder beider möglichen Drehrichtungen des vollständig eingeführten Drehwerkzeugkopfes versehenen Seitenwandung begrenzt ist. D.h., der Werkzeugaufnahmeraum besteht bei dieser Ausführungsform aus zwei oder mehreren nicht miteinander verbundenen Teilbereichen, die vorzugsweise dieselbe räumliche Ausdehnung und denselben Abstand von der Längsachse der Schraube aufweisen und auch vorzugsweise in einer gemeinsamen Ebene, die normal zur Längsachse der Schraube verläuft, liegen. Auch die verschiedenen möglichen Ausführungen dieser Ausführungsform mit mehrteiligem Werkzeugaufnahmeraum können sowohl ein-, als auch mehrschichtig gestaltet sein, entscheidend ist eine Vergrößerung des achsnormalen Querschnittes jenes Bereiches des Werkzeugaufnahmeraumes, der dem Schraubenschaft näher liegt, gegenüber der Einführöffnung. Diese auch räumliche Vergrößerung des Werkzeugaufnahmeraumes in diesem Bereich ist durch mindestens eine Ausnehmung oder Hinterschneidung in Richtung der Drehbewegung des oder der in diese Ausnehmung oder Hinterschneidung eingreifenden Teile(s) des Drehwerkzeugkopfes vorgesehen.

Der Werkzeugaufnahmeraum und die wenigstens eine Ausnehmung der Schraube bilden insbesondere eine Aufnahme eines Bajonettverschlusses. Ein Bajonettverschluss ist eine Vorrichtung zum leicht lösbaren Verbinden zweier Teile in der Richtung ihrer Längsachsen. Eine Bajonettverbindung erfolgt über eine Steck-Dreh-Bewegung. Dabei wird das Drehwerkzeug, welches die Steckeinheit des Bajonettverschlusses aufweist, in die Aufnahme des Bajonettverschlusses an dem Schraubenkopf eingesteckt. Nach dem vollständigen Einstecken der Steckeinheit des Drehwerkzeuges, die durch den Drehwerkzeugkopf und einem Teilbereich des Drehwerkzeugschaftes des Drehwerkzeuges gebildet wird, werden durch eine Drehbewegung des Drehwerkzeuges der Drehwerkzeugkopf und die Aufnahme des Bajonettverschlusses ineinandergefügt. Der Bajonettverschluss arbeitet ähnlich wie ein Gewinde. Der Drehwerkzeugkopf weist den Teil der Steckeinheit auf, der in den abgewinkelt oder in Drehrichtung angeordneten Teil der Steckaufnahme, hier die Ausnehmung, eingreift.

Da das Drehwerkzeug während des Drehens bzw. Schraubens aufgrund seiner Form und Bauart eine kraftschlüssige, axial fixierte Verbindung mit der Schraube eingeht, ist es nicht erforderlich axialen Druck auf die Schraube auszuüben, weder beim Eindrehen, noch beim Ausdrehen der Schraube. Bei Arbeiten mit großen oder langen Schrauben oder solchen, die hohe Drehmomente erfordern, und an schwer zugänglichen oder engen Stellen, wo ggf. auch Winkelvorsätze erforderlich sind, ist dieser Vorteil von großer Bedeutung. Bei sehr fest sitzenden Schrauben, wie etwa bei verwitternden Verschraubungen im Freien, gibt es wesentlich bessere Rückholmöglichkeiten der Schrauben. Auch bei Befestigungen mit Spreizdübeln bleiben die Dübel dort, wo sie hingehören und werden nicht etwa durch lockeres Mauerwerk oder Hohlräume verschoben oder gar verfehlt. Die erfindungsgemäß ausgebildeten Schrauben knicken nicht mehr so leicht um und man kann eine derartige Schraube präziser in eine Richtung lenken, da es nicht nachdrücklich erforderlich ist, die Aufrechterhaltung der Verbindung von Drehwerkzeug und Schraube zu gewährleisten.

Ohne Anpressdruck anwenden zu müssen, kann die Einschraubtiefe einer derartigen Schraube besser, schneller und genauer kontrolliert und gegebenenfalls auch korrigiert werden. Durch die spezielle Ausgestaltung des Schraubenkopfes bzw. der Werkzeugaufnahme des Schraubenkopfes kann eine solche Schraube, egal aus welchem Material, weitgehend unabhängig von der Beschaffenheit oder der Dichte des Werkstückes ohne Anpressdruck, der bei bekannten Schrauben über das Drehwerkzeug aufgebracht wird, ein- und insbesondere ausgedreht werden. Je härter und dichter das Material der Schraube ist, desto leichter ist in der Regel das Herausdrehen der Schraube aus einem Werkstück. Es ist aber möglich, insbesondere beim Einschrauben derartig ausgebildeter Schrauben, einen bestimmten Anpressdruck auf die Schraube auszuüben und dadurch die Schraube bewusst mit Nachdruck oder besonders schnell einzudrehen. Ebenso kann beim Ausschrauben der Schraube aus einem Werkstück Zug statt Druck durch das Drehwerkzeug ausgeübt werden. D.h., derartige Schrauben ermöglichen einerseits ein druck- und zugfreies Drehen der Schrauben, aber auch, wenn gewünscht, ein kontrollierbares Ausüben von Druck oder Zug auf die Schraube. D.h. das Drehen der Schraube kann in beiden Richtungen dosiert und kontrolliert werden. Viele Decken- oder Überkopfmontagen und Demontagen lassen sich durch den Einsatz derartig ausgebildeter Schrauben schneller und einfacher bewerkstelligen und fordern weniger Kraftaufwand.

Die Form des Werkzeugaufnahmeraumes bzw. der Seitenwandung des Werkzeugaufnahmeraumes kann verschiedenartig ausgebildet sein. Entscheidend ist hierbei die komplementäre Ausgestaltung des Werkzeugaufnahmeraumes und des Drehwerkzeuges bzw. des Drehwerkzeugkopfes. In einer möglichen Ausführungsform der Schraube kann der Werkzeugaufnahmeraum einen sich von der zweiten Stirnseite des Werkzeugaufnahmeraumes zur ersten Stirnseite hin kontinuierlich verjüngenden Querschnitt aufweisen. Insbesondere kann der Werkzeugaufnahmeraum zur ersten Stirnseite hin einen spitz zulaufenden Verlauf, insbesondere einen kreiskegel- oder kreiskegelstumpfförmigen Verlauf aufweisen. Bevorzugt ist jedoch eine Schraube, bei der die Seitenwandung des Werkzeugaufnahmeraumes oder zumindest die Seitenwandung des ersten Teils des Werkzeugaufnahmeraumes parallel zur Längsachse der Schraube verläuft. Eine Schraube mit einem derartig ausgebildeten Werkzeugaufnahmeraum ist leicht herstellbar, relativ kostengünstig und leicht zu reinigen. Die zumindest eine Ausnehmung verläuft geneigt, d.h. in einen Winkel zwischen 1° und 179, insbesondere zwischen 45° und 135°, und ganz besonders in einem Winkel von 90°, zu der Längsachse der Schraube in der Seitenwandung des Werkzeugaufnahmeraumes.

Die Herstellung des Schraubenkopfes kann beispielsweise mit spanenden und spanlosen Verfahren erfolgen. Je nach Ausführungsart und Einsatzbereich der Schraube kann der Werkzeugaufnahmeraum gebohrt, gefräst oder sonst wie spanabhebend ausgenommen werden. Ferner kann er durch Druckumverformung in den Verfahren der Kalt- oder der Warmverformung geschaffen werden. Die zumindest eine Ausnehmung in der Seitenwandung des Werkzeugaufnahmeraumes kann ebenfalls spanend in einem zweiten Arbeitsgang oder aber auch durch Druckumverformung, wenn der Druckstempel die Form des Drehwerkzeugkopfes aufweist und in eine oder beide Richtungen um den Verdrehungswinkel vom Einsetzen der Schraube bis zur Kraftübertragung drehbar gelagert ist, in einem zweiten oder auch schon im ersten Arbeitsgang erzeugt werden.

Bevorzugt verläuft die Längsachse der Einführöffnung bzw. des ersten Teils des Werkzeugaufnahmeraumes koaxial zur Längsachse der Schraube. In Sonderfällen kann bei Schrauben vorgesehen sein, dass die Längsachse der Einführöffnung bzw. des ersten Teils des Werkzeugaufnahmeraumes parallel zu der Längsachse der Schraube verläuft.

Gemäß einer weiteren zweckmäßigen Weiterbildung der Erfindung kann bei der Schraube vorgesehen sein, dass der Werkzeugaufnahmeraum eine oder mehrere Zentriereinrichtung(en) zur gerichteten Aufnahme des Drehwerkzeuges aufweist. Die Zentriereinrichtungen können einerseits dazu dienen, dass das Drehwerkzeug, insbesondere der Drehwerkzeugkopf des Drehwerkzeuges, einfach und leicht durch die Einführöffnung in den Werkzeugaufnahmeraum eingeführt werden kann. Ferner kann eine Zentriereinrichtung vorgesehen sein, die den vollständig eingesteckten Drehwerkzeugkopf besonders sicher in einer bestimmten Position innerhalb des Werkzeugaufnahmeraumes hält, so dass dieser nicht einmal minimal verrutschen kann. Dies ist dann von Bedeutung, wenn etwas zu viel Spiel zwischen dem eingesteckten Drehwerkzeugschaft des Drehwerkzeuges und der Einführöffnung bzw. dem ersten Teil des Werkzeugaufnahmeraumes gegeben ist.

In einer weiteren vorteilhaften Ausführungsvariante kann bei der Schraube vorgesehen sein, dass eine erste Zentriereinrichtung an der ersten Stirnseite des Werkzeugaufnahmeraumes vorgesehen ist, wobei die erste Zentriereinrichtung durch einen in Richtung des ersten Bereiches der Schraube spitz zulaufenden geraden Kreiskegel oder geraden Kreiskegelabschnitt ausgebildet ist, wobei der gerade Kreiskegel oder der gerade Kreiskegelabschnitt koaxial zur Längsachse der Schraube verläuft. Durch derartige Zentriereinrichtungen ist der Drehwerkzeugkopf des eingesteckten Drehwerkzeuges sicher koaxial zur Längsachse der Schraube drehbar gehalten. Hierdurch kann unterbunden werden, dass das Drehwerkzeug in dem Werkzeugaufnahmeraum leicht seitlich verschoben werden kann. Die Zentriereinrichtung ist dabei derart ausgeformt, dass sie einem Drehen des Drehwerkzeuges nicht hinderlich ist. Alternativ oder zusätzlich hierzu kann vorgesehen sein, dass eine zweite Zentriereinrichtung in Form einer kreiskegelabschnittförmigen Ausbohrung an der Einführöffnung der zweiten Stirnseite des Werkzeugaufnahmeraumes vorgesehen ist, wobei die Ausbohrung koaxial zur Längsachse der Schraube verläuft und in Richtung des ersten Bereiches der Schraube, d.h. in Richtung des Schraubenschaftes, verjüngend zuläuft. Eine derartig ausgebildete Schraube ermöglicht ein besonders einfaches Einstecken des Drehwerkzeuges bzw. des Drehwerkzeugkopfes in die Werkzeugaufnahme des Schraubenkopfes.

Bei der Schraube kann gemäß einer weiteren zweckmäßigen Weiterbildung der Erfindung vorgesehen sein, dass die wenigstens eine Ausnehmung in der Seitenwandung des Werkzeugaufnahmeraumes im Bereich der Peripherie des Schraubenkopfes vorgesehen ist. Je weiter die wenigstens eine Ausnehmung von der Längsachse der Schraube entfernt ist, desto besser können Drehmomente von dem eingedrehten Drehwerkzeug übertragen werden. Kraftangriffsflächen für das Drehwerkzeug in dem Schraubenkopf, die zum größten Teil in dessen Peripherie liegen, bewirken eine bessere Übertragung des Drehmomentes durch das Drehwerkzeug. Die Ausnehmungen in der Seitenwandung des Werkzeugaufnahmeraumes und damit die Kraftangriffsflächen werden vorteilhafterweise derart angeordnet, dass bei einem Drehvorgang die Resultierenden der Einzelkräfte möglichst ein geschlossenes Krafteck bilden. Durch die Anordnung der Ausnehmungen bzw. der Kraftangriffsflächen in der Peripherie des Schraubenkopfes bleibt bei Schrauben mit einem einzigen Werkzeugaufnahmeraum der Kernbereich des Schraubenkopfes frei für ggf. eine oder mehrere Zentriereinrichtung(en). Der Werkzeugaufnahmeraum ist bei einer derartigen Anordnung der zumindest einen Ausnehmung leicht zu reinigen, da er gut von der Mitte her zugänglich ist. Auch die Herstellung einer derartigen Schraube ist wesentlich einfacher, weil der Kernbereich des Schraubenkopfes einen möglichen Eintauchbereich eines Bearbeitungsgerätes bietet, welches von dort aus Ausfräsungen, Hinterschneidungen oder andere Veränderungen in alle Richtungen der bereits vorhandenen Grundform des Werkzeugaufnahmeraumes vornehmen kann.

Insbesondere bei Senkkopfschrauben gibt es nur in der Nähe der Einführöffnung einen peripheren Wirkungsbereich, wodurch der Winkel, den die radial verteilten Ausnehmungen bzw. Kraftangriffsflächen mit der Längsachse der Schraube bilden, verkleinert und der Gesamtaufbau entsprechend modifiziert ist.

Gemäß eines zweiten Aspektes der Erfindung wird die Aufgabe durch ein Drehwerkzeug zum Drehen einer Schraube, aufweisend zumindest einen Drehwerkzeugschaft und wenigstens einen an einem freien Ende des zumindest einen Drehwerkzeugschaftes angrenzenden Drehwerkzeugkopf, der zum Eingriff in eine Werkzeugaufnahme der Schraube ausgebildet ist, wobei der wenigstens eine Drehwerkzeugkopf und der zumindest eine Drehwerkzeugschaft zusammen eine Steckeinheit eines Bajonettverschlusses bilden, gelöst.

Der Drehwerkzeugschaft grenzt vorteilhafterweise an den Drehwerkzeugkopf an oder stellt einen Teil des Drehwerkzeugkopfes dar. Je nach Ausgestaltung des Drehwerkzeuges kann der gesamte Drehwerkzeugschaft einheitlich stabförmig aufgebaut sein, d.h., entweder einen rechteckigen, vieleckigen oder einen kreisrunden Querschnitt aufweisen, d.h., quader-, prismen- oder zylinderförmig ausgebildet sein, oder kann, wie in einer anderen, bevorzugten Ausführungsvariante des Drehwerkzeuges, an der dem Drehwerkzeugkopf zugewandten Seite kreisrund ausgebildet sein und im weiteren Verlauf einen anderen Querschnitt aufweisen. Das Drehwerkzeug kann beispielsweise als Schraubendreher ausgebildet sein, wobei ein Schraubendreher als ein manuell betätigbares Werkzeug betrachtet wird, welches an der dem Drehwerkzeugkopf abgewandten Seite ein Griffelement aufweist. Dieses Griffelement verläuft vorzugsweise koaxial zu der Längsachse des Drehwerkzeugschaftes. In einer anderen bevorzugten Ausführungsform kann das Drehwerkzeug als ein Schraub-Bit ausgebildet sein. Dieses weist kein gesondertes Griffelement auf, da der Drehwerkzeugschaft selbst durch externe Werkzeuge gegriffen werden kann. Hierzu weist das Drehwerkzeug vorteilhafterweise einen an den bereichsweise kreisrunden Drehwerkzeugschaft angrenzenden Schaftbereich mit einem anderen Querschnitt, insbesondere einem vieleckigen Querschnitt, auf. Besonders bevorzugt ist ein Drehwerkzeug, welches einen viereckigen oder sechseckigen Querschnitt des an den bereichsweise kreisrunden Drehwerkzeugschaft angrenzenden weiteren Drehwerkzeugschaftbereiches aufweist. Die Länge eines als Schraub-Bit ausgebildeten Drehwerkzeuges kann verschiedenartig sein. Bevorzugt entspricht die Länge eines derartigen Drehwerkzeuges den Längen der bekannten Schraub-Bits. Anders ausgebildete Drehwerkzeuge, d.h. insbesondere mit anderen Griffelementen, sind ebenfalls denkbar. Entscheidend ist der Drehwerkzeugkopf des Drehwerkzeuges, der dazu ausgebildet ist, in einen Werkzeugaufnahmeraum einer Schraube gemäß des ersten Aspektes der Erfindung einzugreifen. Dabei ist der Querschnitt des Drehwerkzeugkopfes unwesentlich kleiner als die Einführöffnung, so dass dieser leicht oder passgenau in die Einführöffnung eingesteckt werden kann.

Der Drehwerkzeugkopf und der Drehwerkzeugschaft des Drehwerkzeuges zum Drehen einer Schraube gemäß des ersten Aspektes der Erfindung bilden zusammen eine Steckeinheit eines Bajonettverschlusses. Unter einer Steckeinheit eines Bajonettverschlusses wird ein Element verstanden, das einen Grundkörper, hier zumindest ein Teil des Drehwerkzeugschaftes, und ein abgewinkelt zum Grundkörper oder ein in Drehrichtung zum Grundkörper verlaufendes Schenkelelement, also einen Teil des Drehwerkzeugkopfes, aufweist. Nach dem vollständigen Einstecken des Drehwerkzeugkopfes und von Teilen Drehwerkzeugschaftes des Drehwerkzeuges in den Werkzeugaufnahmeraum des Schraubenkopfes kann das abgewinkelt zum Grundkörper oder in Drehrichtung zum Grundkörper verlaufende Schenkelelement durch eine begrenzte Drehung in die wenigstens eine Ausnehmung in der Seitenwandung des Werkzeugaufnahmeraumes der Schraube eingreifen und dadurch die Einführöffnung bzw. den ersten Teil des Werkzeugaufnahmeraumes hintergreifen.

Vorteilhafterweise umfasst der Drehwerkzeugkopf des Drehwerkzeuges wenigstens einen geneigt, insbesondere um 90° geneigt, zu der Längsachse des Drehwerkzeugschaftes, insbesondere eines kreisrunden Drehwerkzeugschaftes, hervorstehenden Vorsprung. Der wenigstens eine Vorsprung kann an einem Flügelende, insbesondere im äußeren Bereich einer Längsfläche oder einer ungefähr radial verlaufenden Seitenfläche, eines quader- oder prismenförmigen Drehwerkzeugkopfes angeordnet sein. Alternativ kann der wenigstens eine Vorsprung ein in Drehrichtung eines rohrabschnittsförmigen bzw. kreiszylinderförmigen Drehwerkzeugkopfes ausgeformter Vorsprung sein. Dieser wenigstens eine Vorsprung des Drehwerkzeugkopfes kann bei einer Drehung des Drehwerkzeuges in die wenigstens eine Ausnehmung in der Seitenwandung des Werkzeugaufnahmeraumes des Schraubenkopfes eingreifen und somit das Drehwerkzeug axial in dem Werkzeugaufnahmeraum des Schraubenkopfes fixieren. Das Drehwerkzeug kann lediglich durch Zurückdrehen wieder in die Position gebracht werden, in der es aus dem Werkzeugaufnahmeraum des Schraubenkopfes durch eine axiale Bewegung entfernt werden kann.

Der wenigstens eine Vorsprung des Drehwerkzeugschaftes, insbesondere eines kreisrunden oder quader- bzw. prismenförmigen Drehwerkzeugschaftes, kann unterschiedlich geneigt zu der Längsachse angeordnet sein. So ist ein Winkel zwischen 1° und 179° denkbar. In einer vorteilhaften Ausgestaltung des Drehwerkzeuges weist der wenigstens eine derartige Vorsprung Seitenwände auf, die in einem Winkel von 45° bzw. 135° geneigt zu der Längsachse des Drehwerkzeugschaftes angeordnet sind. Bevorzugt verlaufen die Seitenwände dieses wenigstens einen Vorsprungs um 90° geneigt zu der Längsachse des Drehwerkzeugschaftes. Ein solcher Vorsprung kann beispielsweise in Form eines Quaders oder einer Pyramide, eines Tetraeders oder eines Prismas ausgebildet sein.

Der wenigstens eine Vorsprung als Teil der Bajonettaufnahme weist vorzugsweise einen in Richtung seines äußeren Endes abnehmenden Querschnitt auf bzw. hat in seiner Längsrichtung, sofern diese in etwa radialer Richtung liegt, einen spitz zulaufenden oder abgerundeten Querschnitt. Diese Formgebung gewährleistet einen sicheren und schnellen Eingriff des Drehwerkzeuges auch bei einem eventuell leicht schiefen Einsetzen in den wenigstens einen Werkzeugaufnahmeraum, verhindert außerdem ein Verkanten des Drehwerkzeuges in der Schraube und vermeidet starke Abnützungen und Beschädigungen von Schraube und Drehwerkzeugkopf.

Es kann ein Vorsprung oder es können mehrere Vorsprünge an dem Drehwerkzeugkopf vorgesehen sein. Bevorzugt sind mindestens zwei Vorsprünge an dem Drehwerkzeugkopf vorgesehen, die rotationssymmetrisch an dem Drehwerkzeugschaft angeordnet sind. Die Vorsprünge sind vorteilhafterweise gleich lang und breit ausgebildet, so dass das Drehwerkzeug rotationssymmetrisch ausgebildet ist.

Gemäß einer weiteren zweckmäßigen Ausbildung der Erfindung kann bei dem Drehwerkzeug vorgesehen sein, dass der zumindest eine, insbesondere längliche Vorsprung, zu seinem dem Drehwerkzeugschaft abgewandten freien Ende in seiner Breite, wenn die Grundform des Drehwerkzeugkopfes quader-, prismen- oder zylinderförmig ist, oder in seiner Länge, wenn der die Grundform des Drehwerkzeugkopfes rohrabschnittsförmig bzw. kreiszylinderförmig ist, zunimmt. So gestaltet, liegt die Seitenfläche bzw. die schräg zulaufende oder gewölbte Oberfläche des Vorsprunges, die ja zumindest einen Teil des Drehmomentes auf die Schraube überträgt, in eher radialer Richtung und kann das Drehmoment besser übertragen.

Besonders bevorzugt ist ein Drehwerkzeug, bei dem der Drehwerkzeugkopf zur passgenauen Hindurchführung durch die Einführöffnung bzw. durch den ersten Teil des Werkzeugaufnahmeraumes und zum formschlüssigen Eingriff in die zumindest eine Ausnehmung in der Seitenwandung des Werkzeugaufnahmeraumes, insbesondere des zweiten Teils des Werkzeugaufnahmeraumes, der Werkzeugaufnahme des Schraubenkopfes einer Schraube gemäß wenigstens des ersten Aspektes der Erfindung ausgebildet ist.

In einer vorteilhaften Ausführungsform ist der Drehwerkzeugkopf so ausgebildet, dass er leicht oder passgenau, axial durch die Einführöffnung bzw. durch den als Einführöffnung ausgebildeten ersten Teil des zumindest einen Werkzeugaufnahmeraumes hindurchgeführt werden kann, bis er vollständig in dem zumindest einen Werkzeugaufnahmeraum bzw. in dem zweiten Teil des zumindest einen Werkzeugaufnahmeraumes einliegt. In dieser vollständig eingeführten Position sitzt das Drehwerkzeug drehbar gelagert in dem zumindest einen Werkzeugaufnahmeraum ein. Diese Lagerung wird insbesondere auch dadurch erreicht, dass der an dem Drehwerkzeugkopf angrenzende kreisrunde Drehwerkzeugschaft an Bereichen der Einführöffnung bzw. des ersten Teils des zumindest einen Werkzeugaufnahmeraumes passgenau anliegt. Eine radiale Verschiebung des Drehwerkzeuges ist nach dem Einführen des Drehwerkzeugkopfes dann nicht mehr möglich.

Die Erfindung und einige ihre Weiterbildungen sowie deren Vorteile werden nachfolgend anhand von Zeichnungen näher erläutert. Es zeigen jeweils schematisch:
- Figur 1: einen Querschnitt durch den Drehwerkzeugkopf eines vorteilhaften Ausführungsbeispiels eines Drehwerkzeuges,
- Figur 2: eine Draufsicht auf einen zum Drehwerkzeugkopf gemäß Fig. 1 komplementären Schraubenkopf eines vorteilhaften Ausführungsbeispiels einer Schraube, die nach dem erfindungsgemäßen Konstruktionsprinzip ausgebildet ist,
- Figur 3: eine Draufsicht auf das in den Werkzeugaufnahmeraum des Schraubenkopfes gemäß Fig. 2 eingesteckte Drehwerkzeug gemäß Fig. 1,
- Figur 4: einen Vertikalschnitt durch den Schraubenkopf gemäß Fig. 2 und das in den Schraubenkopf eingesteckte komplementäre Drehwerkzeug,
- Figur 5: einen Querschnitt durch den Werkzeugaufnahmeraum des Schraubenkopfes gemäß Fig. 2 und des komplementären Drehwerkzeugkopfes gemäß Fig. 1,
- Figur 6: eine Draufsicht auf das in den Werkzeugaufnahmeraum des Schraubenkopfes gemäß Fig. 2 eingesteckte Drehwerkzeug gemäß Fig. 1, wobei Teile des Drehwerkzeugkopfes in die Ausnehmungen in der Seitenwandung des Werkzeugaufnahmeraumes eingreifen,
- Figuren 7a, 8a, 9a, 10a, 11a, 12a, 13a,:
- 14a, 15a, 16a, 17a, 18a, 19a, 20a, 21a: Draufsichten auf verschiedene Schraubenköpfe,
- Figuren 7b, 8b, 9b, 10,b, 11b, 12b, 13b,:
- 14b, 15b, 16b, 17b, 18b, 19b, 20b, 21b: Draufsichten auf Drehwerkzeugköpfe verschiedener Drehwerkzeuge,
- Figuren 7c, 8c, 9c, 10c, 11 c, 12c, 13c,:
- 14c, 15c, 16c, 17c, 18c, 19c, 20c, 21c: Seitenansichten auf verschiedene Drehwerkzeuge.

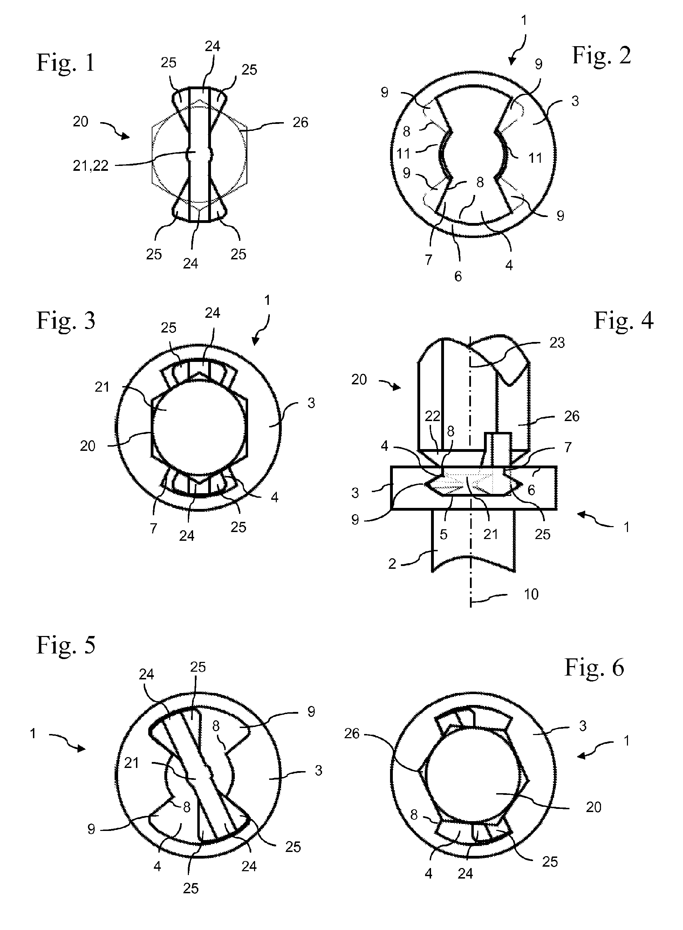

Elemente mit gleicher Funktion und Wirkungsweise sind in den Figuren 1 bis 21c jeweils mit denselben Bezugszeichen versehen.

Die Fig. 1 bis 6 beziehen sich auf ein Ausführungsbeispiel, bei denen das Drehwerkzeug eine Erweiterung eines sogenannten Schraubbits mit einer Schlitzklinge darstellt. Der dazugehörige Schraubenkopf ist mehrschichtig gestaltet.

Fig. 1 zeigt einen Querschnitt durch den Drehwerkzeugkopf 21 eines vorteilhaften Ausführungsbeispiels eines erfindungsgemäß ausgebildeten Drehwerkzeuges 20. Der Drehwerkzeugkopf 21 weist eine Schlitzklinge 24 auf. Die seitlichen Vorsprünge 25 an der Schlitzklinge 24 dienen zum Eingriff in komplementär ausgebildete Ausnehmungen in dem Werkzeugaufnahmeraum des Schraubenkopfes einer Schraube. In der Fig. 1 ist ferner das Griffelement 26 des Drehwerkzeuges 20 schematisch dargestellt. Dieses ist in dieser Ausführungsvariante des Drehwerkzeuges 20 sechseckig ausgebildet. Zwischen dem Griffelement 26 und der Schlitzklinge 24 ist ein konisch verjüngter Drehwerkzeugschaft (22) als Zentrier- und Einsetzhilfe vorgesehen.

Generell kann der Drehwerkzeugkopf verschiedenartig ausgebildet sein. Die Vorsprünge sind vorteilhafterweise rotationssymmetrisch um den Drehwerkzeugschaft des Drehwerkzeuges angeordnet. Der Drehwerkzeugschaft und der Drehwerkzeugkopf bilden eine Steckeinheit eines Bajonettverschlusses. Die Vorsprünge sind geneigt, insbesondere um 90° geneigt, zu der Längsachse des Drehwerkzeuges angeordnet. Hierdurch können diese nach dem vollständigen Einstecken des Drehwerkzeugkopfes in den Werkzeugaufnahmeraum einer Schraube in die als Hinterschneidung ausgebildeten Ausnehmungen in der Seitenwandung des Werkzeugaufnahmeraumes eingedreht werden, um so das Drehmoment des Drehwerkzeuges, bzw. einen Teil davon, auf die Schraube zu übertragen und gleichzeitig eine axiale Verschiebung des Drehwerkzeuges in dem Werkzeugaufnahmeraum zu unterbinden.

In der Fig. 2 ist eine Draufsicht auf einen zum Drehwerkzeugkopf gemäß Fig. 1 komplementären Schraubenkopf 3 eines vorteilhaften Ausführungsbeispiels einer Schraube 1, die nach dem erfindungsgemäßen Konstruktionsprinzip ausgebildet ist, gezeigt. In dem Schraubenkopf 3 ist eine Werkzeugaufnahme mit einem Werkzeugaufnahmeraum 4 vorgesehen. Der Werkzeugaufnahmeraum 4 weist eine Einführöffnung 7 an seiner zweiten Stirnseite 6 auf. Die Einführöffnung 7 weist in ihrem zentralen Bereich zwei kreissegmentförmige Bereiche 11 auf, die dazu dienen, den eingeführten Drehwerkzeugschaft eines Drehwerkzeuges drehbar zu lagern. Die kreissegmentförmigen Bereiche 11 verhindern eine radiale Verschiebung des Drehwerkzeuges in dem Werkzeugaufnahmeraum 4. Die Einführöffnung 7 bildet in diesem Ausführungsbeispiel der Schraube 1 einen ersten Teil des Werkzeugaufnahmeraumes 4. An den ersten Teil des Werkzeugaufnahmeraumes 4 grenzt ein näher zum Schraubenschaft der Schraube 1 liegender zweiter Teil des Werkzeugaufnahmeraumes 4 an. In dem zweiten Teil des Werkzeugaufnahmeraumes 4 sind Ausnehmungen 9 in der Seitenwandung 8 des Werkzeugaufnahmeraumes 4 vorgesehen, die durch die dünnen Linien angedeutet sind. Die Ausnehmungen 9 hinterschneiden den ersten Teil des Werkzeugaufnahmeraumes 4, so dass ein in die Ausnehmungen 9 eingreifender Drehwerkzeugkopf axial fixiert ist. Diese Ausnehmungen 9 sind derart angeordnet, dass ein eingesteckter Drehwerkzeugkopf in beide Drehrichtungen begrenzt gedreht werden kann, so dass die Schraube 1 in ein Werkstück ein- oder ausgeschraubt werden kann.

Fig. 3 zeigt eine Draufsicht auf das in den Werkzeugaufnahmeraum 4 des Schraubenkopfes 3 gemäß Fig. 2 eingesteckte Drehwerkzeug 20 gemäß Fig. 1. Der Drehwerkzeugkopf 21, bestehend aus einer Schlitzklinge 24 mit Vorsprüngen 25 und eines Teils des konisch verjüngten Drehwerkzeugschaftes 22, weist eine ähnliche Form der Einführöffnung 7 bzw. des ersten Teils des Werkzeugaufnahmeraumes 4 auf, wobei er etwas kleiner ausgebildet ist als die Einführöffnung 7 bzw. der erste Teil des Werkzeugaufnahmeraumes 4, so dass er leicht durch diese(n) hindurchgeführt werden kann. In dieser dargestellten Position des Drehwerkzeuges 20 greifen die Vorsprünge 25 an der Schlitzklinge 24 des Drehwerkzeugkopfes 21 nicht in die Ausnehmungen des Werkzeugaufnahmeraumes 4 des Schraubenkopfes 3 ein.

In der Fig. 4 ist ein Vertikalschnitt durch den Schraubenkopf 3 gemäß Fig. 2 und das in den Schraubenkopf 3 eingesteckte komplementäre Drehwerkzeug 20 gezeigt. Das Drehwerkzeug 20 weist ein Griffelement 26 sowie einen Drehwerkzeugschaft 22 auf. Der Drehwerkzeugschaft 22 ist kreiskegelstumpfförmig ausgebildet, so dass er drehbar in der Einführöffnung 7 des Werkzeugaufnahmeraumes 4 des Schraubenkopfes 3 der Schraube 1 lagerbar ist. Die Vorsprünge 25 des Drehwerkzeugkopfes 21 sind in die Ausnehmungen 9 in der Seitenwandung 8 des Werkzeugaufnahmeraumes 4 eingedreht. D.h., die Vorsprünge 25 hintergreifen dadurch die Einführöffnung 7 des Werkzeugaufnahmeraumes 4, wodurch das Drehwerkzeug 20 axial fixiert in dem Werkzeugaufnahmeraum 4 sitzt. Durch eine Drehung des Drehwerkzeuges 20 kann ein Drehmoment auf die Schraube 1 übertragen werden, ohne dass das Drehwerkzeug 20 aus dem Werkzeugaufnahmeraum 4 abrutschen bzw. herausrutschen kann.

Die Vorsprünge des Drehwerkzeugkopfes können ebenso wie die Ausnehmung in der Seitenwandung des Werkzeugaufnahmeraumes verschiedenartig ausgebildet sein. Entscheidend ist, dass ein zu den Ausnehmungen komplementärer Drehwerkzeugkopf in den speziell ausgebildeten Werkzeugaufnahmeraum eingesteckt wird. Die vorzugsweise als Nute, Vertiefungen oder Aussparungen ausgebildeten Ausnehmungen verlaufen vorteilhafterweise parallel zu einer Ebene, die senkrecht zu der Längsachse der Schraube verläuft.

In der Fig. 5 ist ein Querschnitt des Werkzeugaufnahmeraumes 4 eines Schraubenkopfes 3 gemäß Fig. 2 einer Schraube 1 und des komplementären Drehwerkzeugkopfes 21 gemäß Fig. 1 dargestellt. Die Vorsprünge 25 liegen in den Ausnehmungen 9 des Werkzeugaufnahmeraumes 4 ein. Hierdurch kann bei einer weiteren Drehung des Drehwerkzeuges 20 ein Drehmoment auf die Schraube 1 übertragen werden. Die nicht dargestellte Einführöffnung oder der als Einführöffnung dienende erste Teil des Werkzeugaufnahmeraumes 4, der nicht dargestellt ist, verhindern eine axiale Verschiebung des Drehwerkzeugkopfes 21 aus dem Werkzeugaufnahmeraum 4. Dies ist in der Fig. 6 dargestellt. Zwei der Vorsprünge 25 greifen durch die Linksdrehung des Drehwerkzeuges 20 in die komplementär ausgebildeten Ausnehmungen 9 in der Seitenwandung 8 des Werkzeugaufnahmeraumes 4 ein, so dass das Drehwerkzeug 20 axial nicht mehr beweglich ist. Die Schlitzklinge 24 liegt mit ihren ebenen Seitenflächen an der Wandung 8 des ersten Teils der Werkzeugaufnahme an. Der Drehwerkzeugkopf befindet sich im Eingriffszustand. Durch eine weitere Linksdrehung des Drehwerkzeuges 20 überträgt dieses ein Drehmoment auf die Schraube 1, so dass diese aus einem Werkstück ausgeschraubt werden kann. Dabei überträgt die Schlitzklinge 24 des Drehwerkzeugkopfes 21 über ihre ebenen Seitenflächen einen Teil des Drehmomentes über die ebenflächigen Bereiche der Wandung 8 des Werkzeugaufnahmeraumes 4, der Rest des Drehmomentes übertragen die Vorsprünge 25 der Schlitzklinge 24 über die Ausnehmungen 9 auf die Schraube 1.

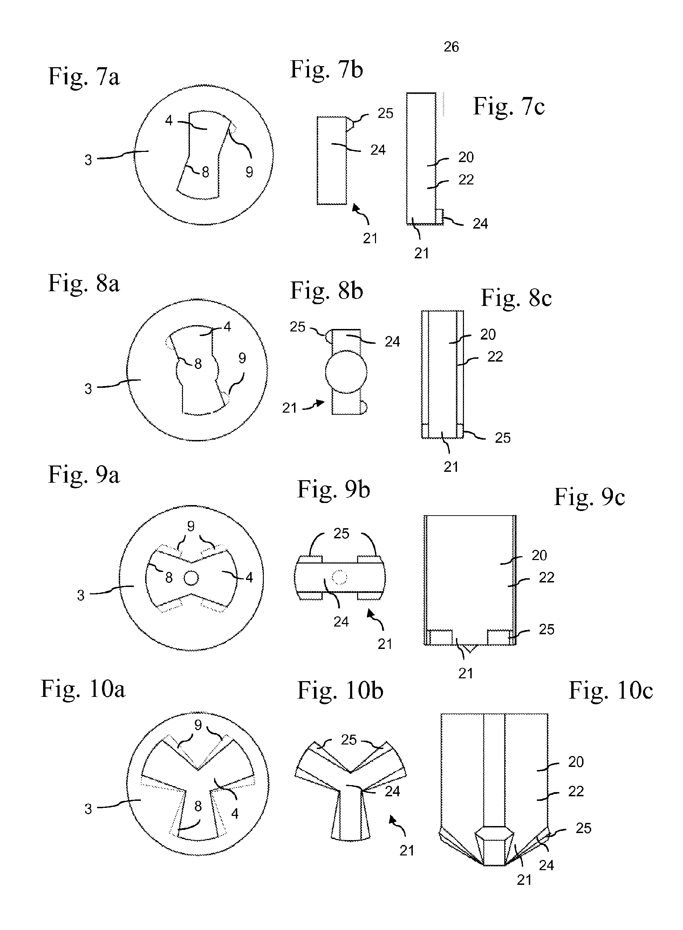

In den Fig. 7a, 8a, 9a, 10a, 11a, 12a, 13a, 14a, 15a, 16a, 17a, 18a, 19a, 20a, 21a sind schematisch Draufsichten auf verschiedene Schraubenköpfe 3 dargestellt. Die Schraubenköpfe 3 weisen verschiedenartige Werkzeugaufnahmeräume 4 auf. Das heißt, die Seitenwandungen 8 der Werkzeugaufnahmeräume 4 weisen verschiedenartige Konturen auf. Die dünn dargestellten Linien stellen in diesen Figuren die Ausnehmungen 9 dar, die ein entsprechend ausgebildetes Drehwerkzeug hintergreifen kann.

In den Fig. 7b, 8b, 9b, 10,b, 11b, 12b, 13b, 14b, 15b, 16b, 17b, 18b, 19b, 20b, 21b sind Draufsichten auf Drehwerkzeugköpfe 21 verschiedener Drehwerkzeuge 20 gezeigt. Dies ist eine nicht ausschließliche Auflistung verschiedener Drehwerkzeugköpfe 21. Je nach Ausgestaltung der Drehwerkzeugköpfe 21 ist der Vorsprung 25 bzw. sind die Vorsprünge 25 unterschiedlich platziert an dem entsprechenden Drehwerkzeugkopf 21 angeordnet. Ferner weisen die Vorsprünge 25 unterschiedliche Größen auf.

In den Fig. 7c, 8c, 9c, 10c, 11c, 12c, 13c, 14c, 15c, 16c, 17c, 18c, 19c, 20c, 21c sind Seitenansichten auf verschiedene Drehwerkzeuge 20 gezeigt. Die Figuren mit der gleichen Anfangsziffer bilden jeweils eine Einheit. Das heißt, der Drehwerkzeugkopf 21 in Fig. 9b stellt den Drehwerkzeugkopf 21 des Drehwerkzeuges 20 gemäß Fig. 9c dar. Das Drehwerkzeug 20 bzw. der Drehwerkzeugkopf 21 sind ferner komplementär zu dem Schraubenkopf 9a ausgebildet. Der Schraubenkopf 9a kann durch das Drehwerkzeug 20 bzw. den Drehwerkzeugkopf 21 der Fig. 9c bzw. 9b gedreht werden. Die Drehwerkzeugköpfe 21 sind am Ende der Drehwerkzeugschafte 22 vorgesehen.

In den Fig. 7c, 8c, 9c, 10c, 11c sind Drehwerkzeuge 20 dargestellt, die vorzugsweise einen kreisrunden Drehwerkzeugschaft 22 aufweisen. Der jeweilige Drehwerkzeugschaft 22 dieser Drehwerkzeuge 20 kann aber auch andere Geometrien aufweisen. Bei diesen Beispielen ist eine drehbare Lagerung auch nur durch die kreisbogenförmigen Begrenzungen der Einführöffnungen in der Peripherie der jeweiligen komplementären Schraubenköpfe 7a, 8a, 9a, 10a, 11a möglich, die den äußeren Kanten oder auch den Flügelstirnflächen als Führung dienen können. In Fig. 10a ist beispielsweise eine Schraube mit einem Senkkopf dargestellt.

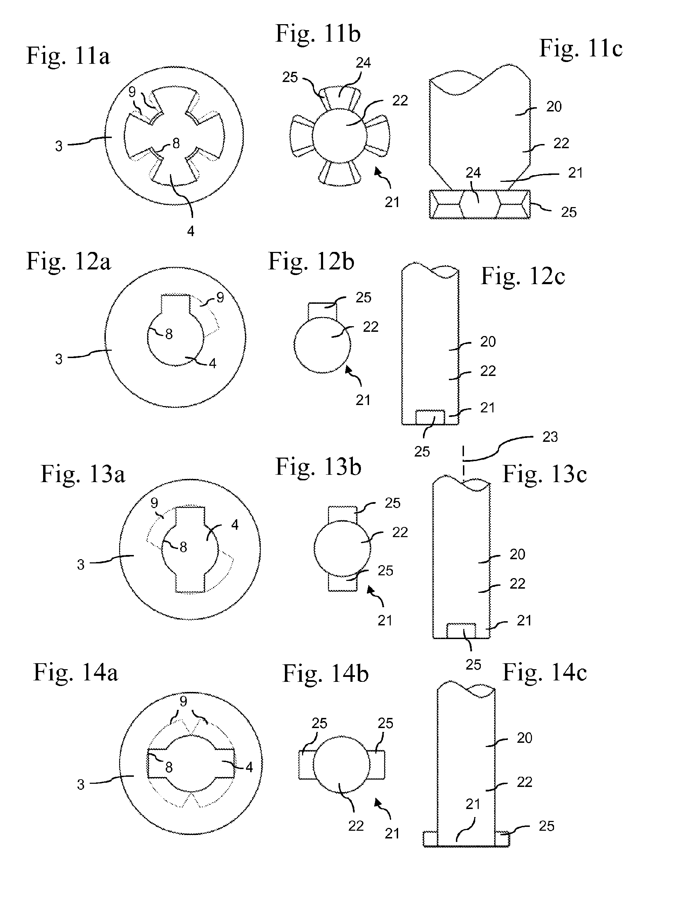

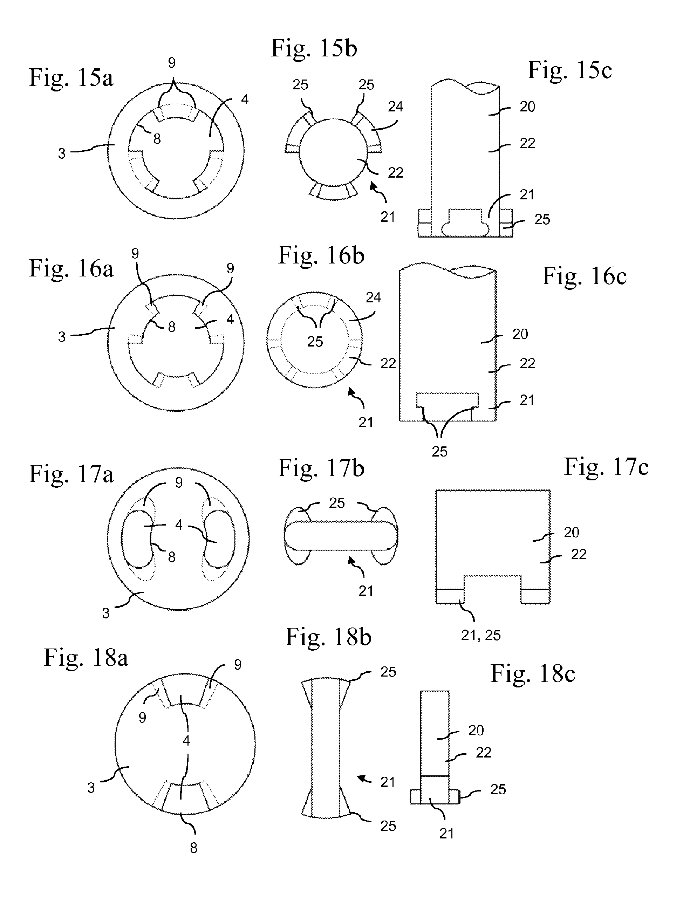

In den Fig. 12c, 13c, 14c, 15c, 16c sind Beispiele von Drehwerkzeugen 20 dargestellt, die einen kreiszylinderförmigen Drehwerkzeugschaft 22 aufweisen. Der Werkzeugaufnahmeraum 4 des entsprechend komplementären Schraubenkopfes 3 ist mehrschichtig aufgebaut. Die Drehwerkzeuge 20 der Beispiele 12c, 13c und 14c weisen ein einfaches T-Profil als Drehwerkzeugkopf 21 auf. D.h., der Drehwerkzeugkopf 21 selbst bildet die Vorsprünge 25, die in die entsprechenden Ausnehmungen 9 in einem Werkzeugaufnahmeraum 4 eingreifen. Bei dem Drehwerkzeuge 20 gemäß Fig. 16c sind die Vorsprünge 25 nach Innen gerichtet.

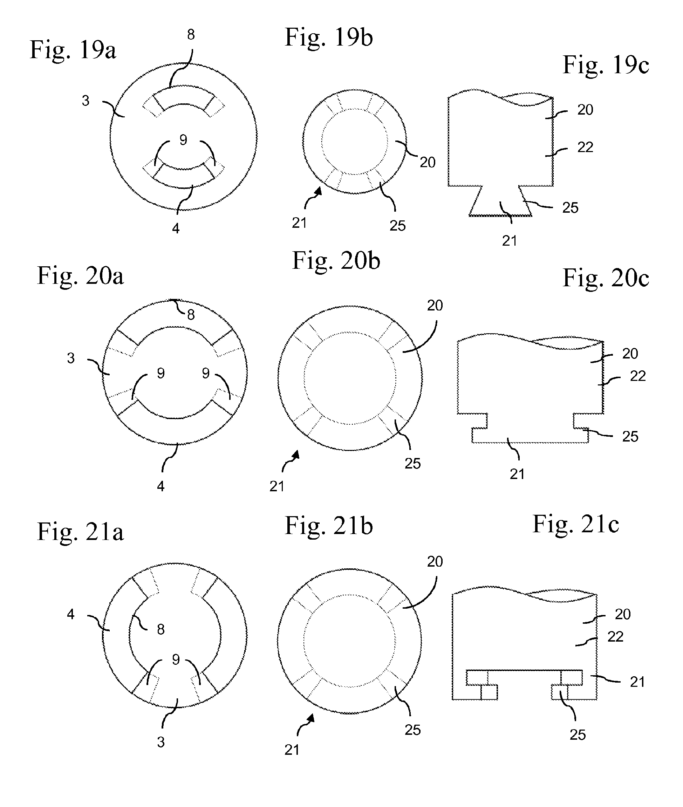

In den Fig. 17a, 18a, 19a, 20a, 21 a sind Schraubenköpfe 3 mit einer Werkzeugaufnahme dargestellt, die zwei getrennte Werkzeugaufnahmeräume 4 aufweisen. Der Werkzeugaufnahmeraum 4 der Schraubenköpfe 3 der Bespiele 17a, 18a, 20a, 21 a sind mehrschichtig ausgebildet, während der Werkzeugaufnahmeraum 4 des Schraubenkopfes 3 des Beispiels gemäß Fig. 19a einschichtig aufgebaut ist. Die Schraubenköpfe 3 sowie die Drehwerkzeuge 20 bzw. die Drehwerkzeugköpfe 21 der Beispiele 20 und 21 sind identisch, jedoch in ihrer Ansicht um 90° gedreht. Bei den Drehwerkzeugen 20 der Beispiele 20b, c und 21 b, c weisen die Drehwerkzeugköpfe 21 ein rohrförmiges Unterteil mit Ausschnitten in der Rohrwand auf.

Beispielsweise ist in der Fig. 13b ein Querschnitt durch einen Drehwerkzeugkopf 21 einer möglichen Ausführungsform des Drehwerkzeuges 20 dargestellt. Der Drehwerkzeugkopf 21 ist recht einfach ausgebildet. So weist der Drehwerkzeugkopf 21 einen kreisrund ausgebildeten zentralen Bereich 27 auf, an dem zwei, um 180° versetzt zueinander angeordnete, Vorsprünge 25 hervorspringen. Die Vorsprünge 25 weisen in dieser Ausführungsform des Drehwerkzeuges 20 einen eckigen Querschnitt auf. Bevorzugt sind jedoch zumindest die freien Endes der Vorsprünge 25 gewölbt oder abgerundet ausgebildet.

Die Fig. 13c zeigt eine Seitenansicht einer möglichen Ausführungsform eines Drehwerkzeuges 20. Dieses ist einfach ausgebildet. Das Drehwerkzeug 20 weist einen, insbesondere kreisrund ausgebildeten, Drehwerkzeugschaft 22 auf, an dessen Ende der Drehwerkzeugkopf 21 vorgesehen ist. Das Drehwerkzeug 20 ist rotationssymmetrisch um dessen Längsachse 23 aufgebaut.

Allgemein betrachtet betrifft die Erfindung eine Schraube und ein dazugehöriges Drehwerkzeug, das während des Ein- und Ausdrehens selbsttätig eine bajonettartige, das Drehmoment übertragende kraftschlüssige axiale Verbindung mit dem Schraubenkopf der Schraube herstellt, welche auch wieder leicht und schnell gelöst werden kann. Die bajonettartige Verbindung von Drehwerkzeug und Schraube kann auch bei höheren Drehmomenten verhindern, dass das Drehwerkzeug während des Ein- oder des Ausschrauben der Schraube aus dem Schraubenkopf, d.h. aus der speziell ausgebildeten Werkzeugaufnahme des Schraubenkopfes, herausrutschen kann.

Das Zusammenwirken der Schraube und des Drehwerkzeuges verhindert starke Abnützungen oder Beschädigungen an der Schraube und dem Drehwerkzeug. Durch die sichere Lagerung des eingesteckten und bajonettartig drehbaren Drehwerkzeuges kann das Risiko von Verletzungen und auch Beschädigungen des Werkstückes vermieden werden. Die Schraubenköpfe leiern nicht mehr aus.

Während des Schraubvorganges kommt eine bajonettartige Verbindung von Drehwerkzeug und Schraube zustande. Dabei wird das Drehwerkzeug axial in eine seiner Kopfform entsprechende, aber geringfügig größere Einführöffnung des Schraubenkopfes eingeführt, in der das Drehwerkzeug nach dem vollständigen Einstecken noch eine in beide Richtungen mögliche Verdrehung erfährt, bis es sich formschlüssig mit der Schraube verbindet und die Kraftübertragung einsetzt. Während dieser Verdrehung erreichen entweder seitlich an den Flügeln eines Drehwerkzeugkopfes mit der Grundform eines quader- prismen- oder zylinderförmigen Stabes vorgesehene, in etwa radialer Richtung angebrachte, keilförmige, abgerundete oder ähnlich gestaltete hervorspringende Körper, oder quader- oder prismenförmige oder zylinderförmige Körper, welche sich auf einem kreiszylinderförmigen Drehwerkzeugschaft befinden oder aber in der Drehrichtung eines als Rohrabschnitt oder als eingeschnittener Kreiszylinder gestalteten Drehwerkzeugkopfes ausgeformte vorspringende Körper, die diesen jeweiligen Körpern komplementär gestalteten Ausnehmungen im unteren Schraubenkopfbereich, die dort entweder eingeschnitten, eingefräst oder anders ausgenommen oder ausgespart wurden. Deren Oberflächen sind auch die Hauptangriffsfläche der Kraftübertragung vom Drehwerkzeug auf die Schraube, nachdem eine kraftschlüssige Verbindung zwischen diesen beiden Teilen hergestellt worden ist. Solange über diese Hauptangriffsflächen das Drehmoment übertragen wird, besteht eine axiale Verbindung zwischen Drehwerkzeug und Schraube. Diese Verbindung kann aber einfach und schnell wieder gelöst werden, indem man den Drehvorgang unterbricht und nach einer Gegendrehung des Drehwerkzeuges um den Verdrehungswinkel dieses aus dem Schraubenkopf axial herauszieht. Nach einer Verdrehung des Drehwerkzeuges um den doppelten Verdrehungswinkel in die Gegenrichtung kann sofort in diese weitergearbeitet werden, was auch schnelle Richtungswechsel ermöglicht, zum Beispiel bei Einstell- oder Korrekturaufgaben.

Der Aufbau des Drehwerkzeugkopfes kann eine Erweiterung eines bekannten Schraubenziehers mit einer einfachen Schlitzklinge oder einer Kreuzklinge darstellen. Das Drehwerkzeug kann ein Schraubendreher, ein Schraub-Bit, wobei zumindest ein Bereich des Drehwerkzeugschaftes einen vieleckigen, insbesondere sechseckigen Querschnitt aufweist, oder ein ähnliches Schraubwerkzeug sein. Als sicherste und effizienteste Methode der Anwendung des Schraub-Bits empfiehlt sich der maschinelle Betrieb mit einem elektrisch betriebenen Schraubgerät, das mit einer Sicherheitsrutschkupplung und einer Drehmomenteinstellung ausgestattet ist. Das Erfindungsprinzip lässt sich auf sehr viele Schraubenkopfgrößen und -formen, mit und ohne Senkkopf, anwenden, wobei, je nach Verwendungszweck, die detaillierte Ausführung durchaus verschieden sein kann.
Durch gezielte Auswahl des Materials und Abstimmung von Form, Größe und Art können eigene Schrauben- und Drehwerkzeugtypen für bestimmte Einsatzbereiche entwickelt werden.

Die Schraube und das Drehwerkzeug bieten viele Vorteile gegenüber den bisher bekannten Schraubsystemen. Da das Drehwerkzeug während des Schraubens aufgrund seiner Form und Bauart eine kraftschlüssige Verbindung mit der Schraube eingeht, ist es nicht notwendig, axialen Druck auf Schraube auszuüben, weder beim Eindrehen, noch beim Ausdrehen von Schrauben. Bei Arbeiten mit großen oder langen Schrauben oder solchen, die hohe Drehmomente erfordern, und an schwer zugänglichen oder engen Stellen, wo man vielleicht schon Winkelvorsätze braucht, ist dieser Vorteil von großer Bedeutung. Bei sehr fest sitzenden Schrauben, wie etwa bei verwitternden Verschraubungen im Freien, gibt es wesentlich bessere Rückholmöglichkeiten. Auch bei Befestigungen mit Spreizdübeln bleiben die Dübel dort, wo sie hingehören und werden nicht etwa durch lockeres Mauerwerk oder Hohlräume verschoben oder gar verfehlt. Schrauben knicken nicht mehr so leicht um und eine Schraube kann präziser in eine Richtung gelenkt werden, da die Aufrechterhaltung der Verbindung von Drehwerkzeug und Schraube kein Problem darstellt. Ohne zusätzlichen Pressdruck anwenden zu müssen, kann die Einschraubtiefe besser, schneller und genauer kontrolliert und gegebenenfalls auch korrigiert werden. Ohne Anpressdruck kann theoretisch eine derartige Schraube aus praktisch jedem Werkstück vollständig ausgedreht werden. Es kann, etwa beim Einschrauben, trotzdem wie gewohnt auch Druck dabei angewendet und die Schraube bewusst mit Nachdruck oder besonders schnell eingedreht werden. Ebenso kann beim Ausschrauben Zug statt Druck angewendet werden, also der Druck umgekehrt und somit in beiden Richtungen dosiert und kontrolliert die Wirkung verstärkt werden. Viele Decken- oder Überkopfmontagen und Demontagen lassen sich so schneller und einfacher bewerkstelligen und fordern weniger Kraftaufwand.

Ein weiterer Vorteil der Schraube besteht darin, dass die Kraftangriffsflächen des Schraubenkopfes zum größten Teil in dessen Peripherie liegen. Dies erwirkt eine bessere Übertragung des Drehmomentes. Die Verteilung der Übertragungsflächen wird vorteilhafterweise so gewählt, dass die Resultierenden der Einzelkräfte möglichst ein geschlossenes Krafteck bilden. Durch die Anordnung der Kraftangriffsflächen in der Peripherie bleibt der Kernbereich des Schraubenkopfes frei für eine Zentriereinrichtung, wie beispielsweise eine Zentrierbohrung oder eine Einsetzhilfe. Ein einteiliger Werkzeugaufnahmeraum der Schraube ist leicht zu reinigen, da er gut von der Mitte her zugänglich ist. Auch die Herstellung einer Schraube mit einteiligem Werkzeugaufnahmeraum ist relativ einfach, da der Kernbereich des Schraubenkopfes einen möglichen Eintauchbereich eines Bearbeitungsgerätes bietet, welches von dort aus Ausfräsungen, Hinterschneidungen oder andere Veränderungen in alle Richtungen der bereits vorhandenen Grundform des Werkzeugaufnahmeraumes vornehmen kann. Bei Senkkopfschrauben gibt es nur in der Stirnflächenebene einen peripheren Wirkungsbereich, deshalb wird der Winkel, den die radial verteilten Kraftangriffsflächen mit der Drehachse bilden, verkleinert und der Gesamtaufbau entsprechend modifiziert.

Es ist möglich die bajonettartige Verbindung nur in einer Drehrichtung zustande kommen zu lassen, indem jeweils nur auf einer Flügelseite eines quader- oder zylinderförmigen Drehwerkzeugkopfes die Vorsprünge ausgebildet und nur die entsprechenden Ausnehmungen im Schraubenkopf vorgesehen sind bzw. in nur einer Drehrichtung eines rohrabschnittsförmigen oder kreiszylinderförmigen Drehwerkzeugkopfes die Vorsprünge vorhanden sind. Ein weiterer Sonderfall wäre eine Kombination, welche durch eine Sollbruchstelle im Drehwerkzeugkopf gekennzeichnet ist und dadurch eine Überschreitung eines bestimmten Drehmomentes verhindern kann. Ein so abgebrochener Drehwerkzeugkopf wird dabei die Schraube nicht beschädigen.

Die Herstellung des Drehwerkzeuges bzw. des Drehwerkzeugkopfes kann auf mehrere verschiedene Arten erfolgen und wird auf den Verwendungszweck abzustimmen sein. Der Drehwerkzeugkopf kann aus einem Stück und aus einem Material geformt sein, aber auch aus mehreren Teilen und verschiedenen Materialien bestehen. So können die hervorspringenden Bereich an den Vorsprüngen des Drehwerkzeugkopfes, die auch den Hauptanteil des Drehmomentes übertragen, gesondert und aus einem besonders widerstandsfähigeren Material hergestellt und durch eine sichere und haltbare Verbindung an den Vorsprüngen des Drehwerkzeugkopfes befestigt sein.

### Bezugszeichenliste

- 1: Schraube
- 2: Schraubenschaft / erster Bereich der Schraube
- 3: Schraubenkopf / zweiter Bereich der Schraube
- 4: Werkzeugaufnahmeraum
- 5: erste Stirnseite des Werkzeugaufnahmeraumes
- 6: zweite Stirnseite des Werkzeugaufnahmeraumes
- 7: Einführöffnung
- 8: Seitenwandung des Werkzeugaufnahmeraumes
- 9: Ausnehmung
- 10: Längsachse der Schraube
- 11: kreissegmentförmige Bereiche der Einführöffnung
- 20: Drehwerkzeug
- 21: Drehwerkzeugkopf
- 22: Drehwerkzeugschaft
- 23: Längsachse des Drehwerkzeugschaft
- 24: Schlitzklinge des Drehwerkzeugkopfes
- 25: Vorsprung am Drehwerkzeugkopf
- 26: Griffelement
- 27: kreisrund ausgebildeter zentraler Bereich

## Patentansprüche

1. Schraube (1), aufweisend einen ersten, einen Schraubenschaft (2) bildenden Bereich und einen zweiten, einen Schraubenkopf (3) bildenden Bereich, wobei der Schraubenkopf (3) eine Werkzeugaufnahme zum Eingriff eines Drehwerkzeuges (20) aufweist, wobei die Werkzeugaufnahme wenigstens einen Werkzeugaufnahmeraum (4) aufweist, der durch eine dem Schraubenschaft (2) zugewandte erste Stirnseite (5), eine dem Schraubenschaft (2) abgewandte zweite Stirnseite (6) mit einer Einführöffnung (7) für das Drehwerkzeug (20) und eine die Stirnseiten (5, 6) verbindende Seitenwandung (8) begrenzt ist, **dadurch gekennzeichnet, dass** in der Seitenwandung (8) des wenigstens einen Werkzeugaufnahmeraumes (4) zumindest bereichsweise wenigstens eine Ausnehmung (9) zum Eingriff des Drehwerkzeuges (20) vorgesehen ist.

2. Schraube (1) nach Anspruch 1, **dadurch gekennzeichnet, dass** die wenigstens eine Ausnehmung (9) eine Hinterschneidung ist.

3. Schraube (1) nach Anspruch 1 oder 2, **dadurch gekennzeichnet, dass** die wenigstens eine Ausnehmung (9) als eine Vertiefung, Nut oder Aussparung ausgebildet ist, die parallel zu einer Ebene angeordnet ist, die senkrecht zu der Längsachse (10) der Schraube (1) verläuft.

4. Schraube (1) nach zumindest einem der vorhergehenden Ansprüche 1 bis 3,
**dadurch gekennzeichnet, dass** der wenigstens eine Werkzeugaufnahmeraum (4) eine erste Geometrie aufweist und die Einführöffnung (7) eine zweite Geometrie aufweist, wobei die zweite Geometrie der Einführöffnung (7) kleiner als die erste Geometrie des wenigstens einen Werkzeugaufnahmeraumes (4) ausgebildet ist.

5. Schraube (1) nach zumindest einem der vorhergehenden Ansprüche 2 bis 4,
**dadurch gekennzeichnet, dass** der Schraubenkopf (3) an seinem stirnseitigen, dem ersten Bereich der Schraube (1) abgewandten freien Ende eine erste Schichtebene und eine zu dem ersten Bereich der Schraube (1) näher liegende, an der ersten Schichtebene angrenzende, zweite Schichtebene aufweist, wobei die beiden Schichtebenen senkrecht zu der Längsachse (10) der Schraube (1) angeordnet sind, und dass die erste Schichtebene einen ersten Teil des Werkzeugaufnahmeraumes (4), der zur vollständigen Hindurchführung eines Drehwerkzeugkopfes (21) des Drehwerkzeuges (20) ausgebildet ist, aufweist und die zweite Schichtebene einen fluchtend zu dem ersten Teil des Werkzeugaufnahmeraumes (4) angeordneten zweiten Teil des Werkzeugaufnahmeraumes (4) aufweist, wobei der zweite Teil des Werkzeugaufnahmeraumes (4) die zumindest eine als Hinterschneidung des ersten Werkzeugaufnahmeraumes (4) ausgebildete Ausnehmung (9) aufweist.

6. Schraube (1) nach zumindest einem der vorhergehenden Ansprüche 1 bis 5,
**dadurch gekennzeichnet, dass** der wenigstens eine Werkzeugaufnahmeraum (4) und die wenigstens eine Ausnehmung (9) eine Aufnahme eines Bajonettverschlusses bilden.

7. Schraube (1) nach zumindest einem der vorhergehenden Ansprüche 1 bis 6,
**dadurch gekennzeichnet, dass** die Seitenwandung (8) des wenigstens einen Werkzeugaufnahmeraumes (4) oder zumindest die Seitenwandung (8) des ersten Teils des wenigstens einen Werkzeugaufnahmeraumes (4) parallel zur Längsachse (10) der Schraube (1) verläuft.

8. Schraube (1) nach zumindest einem der vorhergehenden Ansprüche 5 bis 7,
**dadurch gekennzeichnet, dass** die Längsachse des ersten Teils des wenigstens einen Werkzeugaufnahmeraumes (4) koaxial zur Längsachse (10) der Schraube (1) verläuft.

9. Schraube (1) nach zumindest einem der vorhergehenden Ansprüche 1 bis 8,
**dadurch gekennzeichnet, dass** der wenigstens eine Werkzeugaufnahmeraum (4) eine oder mehrere Zentriereinrichtung(en) zur gerichteten Aufnahme des Drehwerkzeuges (20) aufweist.

10. Schraube (1) nach Anspruch 9, **dadurch gekennzeichnet, dass** eine erste Zentriereinrichtung an der ersten Stirnseite (5) des wenigstens einen Werkzeugaufnahmeraumes (4) vorgesehen ist, wobei die erste Zentriereinrichtung durch einen in Richtung des ersten Bereiches der Schraube (1) spitz zulaufenden geraden Kreiskegel oder geraden Kreiskegelabschnitt ausgebildet ist, wobei der gerade Kreiskegel oder der gerade Kreiskegelabschnitt koaxial zur Längsachse (10) der Schraube (1) verläuft, und/oder dass eine zweite Zentriereinrichtung in Form einer kreiskegelabschnittförmigen Ausbohrung an der Einführöffnung (7) der zweiten Stirnseite (6) des wenigstens einen Werkzeugaufnahmeraumes (4) vorgesehen ist, wobei die Ausbohrung koaxial zur Längsachse (10) der Schraube (1) verläuft und in Richtung des ersten Bereiches der Schraube (1) verjüngend zuläuft.

11. Schraube (1) nach zumindest einem der vorhergehenden Ansprüche 1 bis 10,
**dadurch gekennzeichnet, dass** die wenigstens eine Ausnehmung (9) in der Seitenwandung (8) des wenigstens einen Werkzeugaufnahmeraumes (4) im Bereich der Peripherie des Schraubenkopfes (3) vorgesehen ist.

12. Drehwerkzeug (20) zum Drehen einer Schraube (1), aufweisend zumindest einen Drehwerkzeugschaft (22) und wenigstens einen an einem freien Ende des zumindest einen Drehwerkzeugschaftes (22) angrenzenden Drehwerkzeugkopf (21), der zum Eingriff in eine Werkzeugaufnahme der Schraube (1) ausgebildet ist, **dadurch gekennzeichnet, dass** der wenigstens eine Drehwerkzeugkopf (21) und der zumindest eine Drehwerkzeugschaft (22) zusammen eine Steckeinheit eines Bajonettverschlusses bilden.

13. Drehwerkzeug (20) nach Anspruch 12, **dadurch gekennzeichnet, dass** der wenigstens eine Drehwerkzeugkopf (21) wenigstens einen geneigt, insbesondere um 90° geneigt, zu der Längsachse (23) des Drehwerkzeugschaftes (22) hervorstehenden Vorsprung (25) umfasst.

14. Drehwerkzeug (20) nach Anspruch 13, **dadurch gekennzeichnet, dass** mindestens zwei Vorsprünge (25) an dem Drehwerkzeugkopf (21) vorgesehen, die rotationssymmetrisch an dem Drehwerkzeugschaft angeordnet sind.

15. Drehwerkzeug (20) nach wenigstens einem der vorhergehenden Ansprüche 12 bis 14, **dadurch gekennzeichnet, dass** der wenigstens eine Drehwerkzeugkopf (21) zur passgenauen Hindurchführung durch die Einführöffnung (7) oder durch den ersten Teil des wenigstens einen Werkzeugaufnahmeraumes (4) und zum formschlüssigen Eingriff in die zumindest eine Ausnehmung (9) in der Seitenwandung (8) des wenigstens einen Werkzeugaufnahmeraumes (4), insbesondere des zweiten Teils des wenigstens einen Werkzeugaufnahmeraumes (4), der wenigstens einen Werkzeugaufnahme des Schraubenkopfes (3) einer Schraube (1) gemäß wenigstens einem der Patentansprüche 1 bis 11 ausgebildet ist.

## Geänderte Patentansprüche

### Geänderte Patentansprüche gemäss Regel 137(2) EPÜ.

**1.** Schraube (1), aufweisend einen ersten, einen Schraubenschaft (2) bildenden Bereich und einen zweiten, einen Schraubenkopf (3) bildenden Bereich, wobei der Schraubenkopf (3) eine Werkzeugaufnahme zum Eingriff eines Drehwerkzeuges (20) aufweist, wobei die Werkzeugaufnahme wenigstens einen Werkzeugaufnahmeraum (4) aufweist, der durch eine dem Schraubenschaft (2) zugewandte erste Stirnseite (5), eine dem Schraubenschaft (2) abgewandte zweite Stirnseite (6) mit einer Einführöffnung (7) für das Drehwerkzeug (20) und eine die Stirnseiten (5, 6) verbindende Seitenwandung (8) begrenzt ist, **dadurch gekennzeichnet, dass** in der Seitenwandung (8) des wenigstens einen Werkzeugaufnahmeraumes (4) zumindest bereichsweise wenigstens eine sich in die Tiefe konisch verjüngende oder abgerundete Ausnehmung (9) zum Eingriff des Drehwerkzeuges (20) vorgesehen ist.

**2.** Schraube (1) nach Anspruch 1, **dadurch gekennzeichnet, dass** die wenigstens eine Ausnehmung (9) eine Hinterschneidung ist.

**3.** Schraube (1) nach Anspruch 1 oder 2, **dadurch gekennzeichnet, dass** die wenigstens eine Ausnehmung (9) als eine Vertiefung, Nut oder Aussparung ausgebildet ist, die parallel zu einer Ebene angeordnet ist, die senkrecht zu der Längsachse (10) der Schraube (1) verläuft.

**4.** Schraube (1) nach zumindest einem der vorhergehenden Ansprüche 1 bis 3, **dadurch gekennzeichnet, dass** der wenigstens eine Werkzeugaufnahmeraum (4) eine erste Geometrie aufweist und die Einführöffnung (7) eine zweite Geometrie aufweist, wobei die zweite Geometrie der Einführöffnung (7) kleiner als die erste Geometrie des wenigstens einen Werkzeugaufnahmeraumes (4) ausgebildet ist.

**5.** Schraube (1) nach zumindest einem der vorhergehenden Ansprüche 2 bis 4, **dadurch gekennzeichnet, dass** der Schraubenkopf (3) an seinem stirnseitigen, dem ersten Bereich der Schraube (1) abgewandten freien Ende eine erste Schichtebene und eine zu dem ersten Bereich der Schraube (1) näher liegende, an der ersten Schichtebene angrenzende, zweite Schichtebene aufweist, wobei die beiden Schichtebenen senkrecht zu der Längsachse (10) der Schraube (1) angeordnet sind, und dass die erste Schichtebene einen ersten Teil des Werkzeugaufnahmeraumes (4), der zur vollständigen Hindurchführung eines
Drehwerkzeugkopfes (21) des Drehwerkzeuges (20) ausgebildet ist, aufweist und die zweite Schichtebene einen fluchtend zu dem ersten Teil des Werkzeugaufnahmeraumes (4) angeordneten zweiten Teil des Werkzeugaufnahmeraumes (4) aufweist, wobei der zweite Teil des Werkzeugaufnahmeraumes (4) die zumindest eine als Hinterschneidung des ersten Werkzeugaufnahmeraumes (4) ausgebildete Ausnehmung (9) aufweist.

**6.** Schraube (1) nach zumindest einem der vorhergehenden Ansprüche 1 bis 5, **dadurch gekennzeichnet, dass** der wenigstens eine Werkzeugaufnahmeraum (4) und die wenigstens eine Ausnehmung (9) eine Aufnahme eines Bajonettverschlusses bilden.

**7.** Schraube (1) nach zumindest einem der vorhergehenden Ansprüche 1 bis 6, **dadurch gekennzeichnet, dass** die Seitenwandung (8) des wenigstens einen Werkzeugaufnahmeraumes (4) oder zumindest die Seitenwandung (8) des ersten Teils des wenigstens einen Werkzeugaufnahmeraumes (4) parallel zur Längsachse (10) der Schraube (1) verläuft.

**8.** Schraube (1) nach zumindest einem der vorhergehenden Ansprüche 5 bis 7, **dadurch gekennzeichnet, dass** die Längsachse des ersten Teils des wenigstens einen Werkzeugaufnahmeraumes (4) koaxial zur Längsachse (10) der Schraube (1) verläuft.

**9.** Schraube (1) nach zumindest einem der vorhergehenden Ansprüche 1 bis 8, **dadurch gekennzeichnet, dass** der wenigstens eine Werkzeugaufnahmeraum (4) eine oder mehrere Zentriereinrichtung(en) zur gerichteten Aufnahme des Drehwerkzeuges (20) aufweist.

**10.** Schraube (1) nach Anspruch 9, **dadurch gekennzeichnet, dass** eine erste Zentriereinrichtung an der ersten Stirnseite (5) des wenigstens einen Werkzeugaufnahmeraumes (4) vorgesehen ist, wobei die erste Zentriereinrichtung durch einen in Richtung des ersten Bereiches der Schraube (1) spitz zulaufenden geraden Kreiskegel oder geraden Kreiskegelabschnitt ausgebildet ist, wobei der gerade Kreiskegel oder der gerade Kreiskegelabschnitt koaxial zur Längsachse (10) der Schraube (1) verläuft, und/oder dass eine zweite Zentriereinrichtung in Form einer kreiskegelabschnittförmigen Ausbohrung an der Einführöffnung (7) der zweiten Stirnseite (6) des wenigstens einen Werkzeugaufnahmeraumes (4) vorgesehen ist, wobei die Ausbohrung koaxial zur Längsachse (10) der Schraube (1) verläuft und in Richtung des ersten Bereiches der Schraube (1) verjüngend zuläuft.

**11.** Schraube (1) nach zumindest einem der vorhergehenden Ansprüche 1 bis 10, **dadurch gekennzeichnet, dass** die wenigstens eine Ausnehmung (9) in der Seitenwandung (8) des wenigstens einen Werkzeugaufnahmeraumes (4) im Bereich der Peripherie des Schraubenkopfes (3) vorgesehen ist.

**12.** Drehwerkzeug (20) zum Drehen einer Schraube (1), aufweisend zumindest einen Drehwerkzeugschaft (22) und wenigstens einen an einem freien Ende des zumindest einen Drehwerkzeugschaftes (22) angrenzenden Drehwerkzeugkopf (21), der zum Eingriff in eine Werkzeugaufnahme der Schraube (1) ausgebildet ist, **dadurch gekennzeichnet, dass** der Drehwerkzeugkopf (21), eine in die konische verjüngte oder abgerundete Ausnehmung eingreifende Form aufweist.

**13.** Drehwerkzeug (20) nach Anspruch 12, **dadurch gekennzeichnet, dass** der wenigstens eine Drehwerkzeugkopf (21) wenigstens einen geneigt, insbesondere um 90° geneigt, zu der Längsachse (23) des Drehwerkzeugschaftes (22) hervorstehenden Vorsprung (25) umfasst.

**14.** Drehwerkzeug (20) nach Anspruch 13, **dadurch gekennzeichnet, dass** mindestens zwei Vorsprünge (25) an dem Drehwerkzeugkopf (21) vorgesehen, die rotationssymmetrisch an dem Drehwerkzeugschaft angeordnet sind.

**15.** Drehwerkzeug (20) nach wenigstens einem der vorhergehenden Ansprüche 12 bis 14, **dadurch gekennzeichnet, dass** der wenigstens eine Drehwerkzeugkopf (21) zur passgenauen Hindurchführung durch die Einführöffnung (7) oder durch den ersten Teil des wenigstens einen Werkzeugaufnahmeraumes (4) und zum formschlüssigen Eingriff in die zumindest eine Ausnehmung (9) in der Seitenwandung (8) des wenigstens einen Werkzeugaufnahmeraumes (4), insbesondere des zweiten Teils des wenigstens einen Werkzeugaufnahmeraumes (4), der wenigstens einen Werkzeugaufnahme des Schraubenkopfes (3) einer Schraube (1) gemäß wenigstens einem der Patentansprüche 1 bis 11 ausgebildet ist.
